# EUROPEAN PATENT APPLICATION

(11) **EP 4 173 876 A1**
(43) Date of publication of application: **03.05.2023**
(21) Application number: 21834188.1
(22) Date of filing: 28.06.2021
(51) Int. Cl.: B60L 5/00, H01F 38/14, H02J 50/12, H02J 7/00, B60L 53/12, H01F 27/28, B60M 7/00

(54) **COIL, POWER TRANSMISSION DEVICE, POWER RECEPTION DEVICE, AND POWER TRANSMISSION SYSTEM**

(30) Priority: 29.06.2020 JP 2020111374; 18.12.2020 JP 2020210596
(71) Applicant: DAI NIPPON PRINTING CO., LTD., Tokyo 162-8001 (JP)
(72) Inventor: OKABE Masato, Tokyo 162-8001 (JP)
(74) Representative: Müller-Boré & Partner Patentanwälte PartG mbB
(86) International application number: PCT/JP2021/024417
(87) International publication number: WO 2022/004676

(57) **Abstract**

The objective of the present invention is to provide a coil or the like capable of improving efficiency in the form of wireless power transmission even when a high frequency current is used.

A power transmission coil TC1 for non-contact power transmission comprises: a power transmission loop coil TL11 wound from an outer circumferential side to an inner circumferential side of the power transmission coil TC1; and a power transmission loop coil TL12 wound from the inner circumferential side to the outer circumference side, wherein the entire shape of the power transmission loop coil TL11 and the power transmission loop coil TL12 in a plan view is the same quadrangle, and in a plan view, the positions of a copper thin film wire TL111 and a copper thin film wire TL112 constituting the power transmission loop coil TL11 when viewed from the center coincides with the positions of a copper thin film wire TL121 and a copper thin film wire TL122 constituting the power transmission loop coil TL12 when viewed from the center.

## Description

### TECHNICAL FIELD

The present invention belongs to the technical fields of a coil, a power transmission device, a power reception device, and a power transmission system. More specifically, the present invention belongs to the technical fields of a coil for non-contact power transmission, a non-contact power transmission device and a power reception device using said coil, and a power transmission system.

### BACKGROUND ART

In recent years, for example, an electric vehicle mounted with a storage battery formed of a lithium ion battery or the like has become widespread. In such an electric vehicle, since a motor is driven by using power stored in a storage battery to move, efficient charging of the storage battery is required. Therefore, as a method of charging a storage battery mounted on an electric vehicle without physically connecting a charging plug or the like to the electric vehicle, research has been conducted on so-called wireless power transmission using a power reception coil and a power transmission coil separated from each other and opposed to each other. General examples of the methods of wireless power transmission include an electric field coupling method, an electromagnetic induction method, a magnetic field resonance method, and the like. When these methods are compared from the viewpoint of, for example, the frequency of power to be transmitted and received, the position degrees of freedom in the respective horizontal and vertical directions, the transmission efficiency, and the like, as a method of wireless power transmission for charging a storage battery mounted on an electric vehicle, an electric field coupling method using a capacitor or a magnetic field resonance method using a coil is promising, and research and development on these methods are also actively conducted. As known documents disclosing such background art, for example, Patent Document 1 below can be cited. Patent Document 1 discloses a coil that performs power transmission by a magnetic field resonance method using one winding (one turn) loop coils and five and a half windings (five and a half turns) open coils.

Meanwhile, the frequency of the power to be transmitted and received by the above-described wireless power transmission is determined in advance by law, for example, for each device responsible for the wireless power transmission, and is a high frequency of 85 kilohertz in the case of power transmission to the above-described electric vehicle. Here, in general, it is known that when a high-frequency current flows through a conductor, the current density is high at the front surface of the conductor and becomes lower from the front surface toward the center thereof. In addition, in this regard, as the frequency of the current increases, the current concentrates on the front surface, and as a result, the AC resistance of the conductor increases. This phenomenon is known as a so-called "conductor skin effect". Note that in the following description, an AC resistance in a conductor when a high-frequency current flows through said conductor is simply referred to as "impedance".

### CITATION LIST

### PATENT DOCUMENT

Patent Document 1: JP 2011-200045 A

### SUMMARY OF THE INVENTION

### PROBLEM TO BE SOLVED BY THE INVENTION

On the other hand, in the above-described wireless power transmission (non-contact power supply) for an electric vehicle, it is necessary to transmit high-output power of at least 3.7 kilowatts (that is, to flow to a coil) while using a high-frequency (for example, the above-described 85 kilohertz) current. Therefore, when the resistance of the conductor (coil) increases due to the above-described skin effect as a result of flowing such high-output power (current), there is a problem in that the loss as a coil increases due to generation of Joule heat, and the efficiency as wireless power transmission is reduced.

In addition, as an electrical phenomenon that reduces the efficiency as wireless power transmission in the same manner as the above-described skin effect, there is a so-called "conductor proximity effect" caused by the conductors coming close to each other in winding as a coil. Therefore, it is also necessary to take measures against an increase in resistance due to the proximity effect.

Thus, the present invention has been made in view of the above-described problems and demands, and an example object is to provide a coil that can, for example, improve efficiency as wireless power transmission even in a case of using a high-frequency current such as 85 kilohertz, for example, and a non-contact power transmission device, a power reception device, and a power transmission system using said coil.

### MEANS FOR SOLVING THE PROBLEM

In order to solve the above-mentioned problem, the invention described in claim 1 is a coil for non-contact power transmission, the coil comprising: a first winding line formed by winding a thin film conductor, the first winding line including a plurality of first linear portions each having a linear shape, and a plurality of first curved portions connecting the first linear portions to each other and each having a curved shape; and a second winding line formed by winding a thin film conductor, the second winding line including a plurality of second linear portions each having a linear shape and a plurality of second curved portions connecting the second linear portions to each other and each having a curved shape, the second winding line being laminated on the first winding line with an insulating layer interposed therebetween, wherein each of overall shapes in a plan view of the first winding line and the second winding line is a mutually identical polygon shape, and a position of at least a part of each of the first linear portions as viewed from a center of the coil coincides with a position of at least a part of each of the second linear portions corresponding to at least a part of each of the first linear portions as viewed from the center in plan view.

The invention according to claim 1 includes: a first winding line including a plurality of first linear portions and a plurality of first curved portions and made of a thin film conductor; and a second winding line including a plurality of second linear portions and a plurality of second curved portions, made of a thin film conductor, and laminated on the first winding line with an insulating layer interposed therebetween. Furthermore, the first winding line and the second winding line each have the same polygonal overall shape in plan view, and the position of at least a part of each first linear portion viewed from the coil center coincides with the position of at least a part of each second linear portion corresponding to at least a part of each first linear portion viewed from the coil center in plan view. Therefore, it is possible to reduce the AC resistance as a coil due to the so-called skin effect or proximity effect caused by forming the winding line with the thin film conductor for weight reduction and cost reduction, and it is possible to concurrently achieve weight reduction and cost reduction, and improvement in transmission efficiency and prevention of an increase in operation temperature.

In order to solve the above-mentioned problem, the invention described in claim 2 is the coil according to claim 1, wherein in the winding of the first winding line, winding transition of one winding is performed only in one of the first curved portions included in one winding, and in the winding of the second winding line, winding transition of one winding is performed only in one of the second curved portions included in one winding.

According to the invention described in claim 2, in addition to the function of the invention described in claim 1, in the winding of the first winding line, the winding transition of one winding is performed only in one first curved portion included in one winding, and in the winding of the second winding line, the winding transition of one winding is performed only in one second curved portion included in one winding. Therefore, the positions of the corresponding first linear portion and second linear portion viewed from the coil center can be made reliably coincide with each other in plan view.

In order to solve the above-mentioned problem, the invention described in claim 3 is the coil according to claim 2, wherein a position of the first curved portion in which the winding transition is performed in the first winding line and a position of the second curved portion in which the winding transition is performed in the second winding line are within a same region of the coil as viewed from the center.

According to the invention described in claim 3, in addition to the function of the invention described in claim 3, since the position of the first curved portion where the winding transition is performed in the first winding line and the position of the second curved portion where the winding transition is performed in the second winding line are in a same region as viewed from the center of the coil, it is possible to make the positions of a larger number of the first linear portions and the second linear portions as viewed from the coil center coincide with each other in plan view.

In order to solve the above-mentioned problem, the invention described in claim 4 is the coil according to claim 1, wherein in the winding of the first winding line, winding transition of one winding is performed only in one of the first linear portions included in one winding, and in the winding of the second winding line, winding transition of one winding is performed only in one of the second linear portions included in one winding.

According to the invention described in claim 4, in addition to the function of the invention described in claim 1, in the winding of the first winding line, the winding transition of one winding is performed only in one first linear portion included in one winding, and in the winding of the second winding line, the winding transition of one winding is performed only in one second linear portion included in one winding. Therefore, the positions of the corresponding first winding line and second winding line viewed from the coil center can be made reliably coincide with each other in plan view.

In order to solve the above-mentioned problem, the invention described in claim 5 is the coil according to claim 4, wherein a position of each of the first curved portions as viewed from the center of the coil coincides with a position of each of the second curved portions corresponding to each of the first curved portions as viewed from the center in plan view.

According to the invention described in claim 5, in addition to the function of the invention described in claim 4, since the position of each first curved portion as viewed from the center of the coil and the position of each second curved portion corresponding to each of said first curved portions as viewed from the center coincide with each other in plan view, the number of portions of each of the first winding line and the second winding line whose positions coincide with each other in plan view increases, so that it is possible to further concurrently achieve weight reduction and cost reduction, and improvement of transmission efficiency and prevention of an increase in operation temperature.

In order to solve the above-mentioned problem, the invention described in claim 6 is the coil according to any one of claims 1 to 5, wherein the first winding line is constituted of two first parallel winding lines arranged in parallel, and the second winding line is constituted of two second parallel winding lines arranged in parallel.

According to the invention described in claim 6, in addition to the function of the invention described in any one of claims 1 to 5, since the first winding line is constituted of the two first parallel winding lines and the second winding line is constituted of the two second parallel winding lines, the AC resistance as a coil can be reduced, and thus, it is possible to further concurrently achieve weight reduction and cost reduction, and improvement in transmission efficiency and prevention of an increase in operation temperature.

In order to solve the above-mentioned problem, the invention described in claim 7 is the coil according to claim 6, wherein in one winding of the first winding line, a width of the first parallel winding line on an inner circumference side is wider than a width of the first parallel winding line on an outer circumference side, and in one winding of the second winding line, a width of the second parallel winding line on an inner circumference side is wider than a width of the second parallel winding line on an outer circumference side.

According to the invention described in claim 7, in addition to the function of the invention described in claim 6, the width of the first parallel winding line on the inner circumference side is formed wider than the width of the first parallel winding line on the outer circumference side, and the width of the second parallel winding line on the inner circumference side is formed wider than the width of the second parallel winding line on the outer circumference side. Therefore, since the AC resistance as a coil can be further reduced, it is possible to further concurrently achieve weight reduction and cost reduction, and improvement in transmission efficiency and prevention of an increase in operation temperature.

In order to solve the above-mentioned problem, the invention described in claim 8 is the coil according to any one of claims 1 to 5, wherein a width of each of the first winding line and the second winding line is wider as the winding is closer to the center.

According to the invention described in claim 8, in addition to the function of the invention described in any one of claims 1 to 7, the width of each of the first winding line and the second winding line is formed wider as the winding is closer to the center of the coil. Therefore, since the width as the winding line is formed wider toward the center of the coil where the current concentrates, the AC resistance as the coil can be further reduced.

In order to solve the above-mentioned problem, the invention described in claim 9 is the coil according to any one of claims 1 to 8, wherein an innermost circumference portion of the first winding line and an innermost circumference portion of the second winding line are connected to each other, power to be transmitted is supplied to an outermost circumference end portion of each of the first winding line and the second winding line at time of power transmission, and power received from each of the outermost circumference end portions is output at time of power reception, an adjustment winding line for adjusting a current flowing through the first winding line and the second winding line is further provided, the adjustment winding line being laminated at a same position as the first winding line and the second winding line, the adjustment winding line includes a plurality of adjustment linear portions each having a linear shape, and a plurality of adjustment curved portions connecting the adjustment linear portions and each having a curved shape, an overall shape in a plan view of the adjustment winding line is the polygon shape identical with the overall shape in a plan view of the first winding line or the second winding line, and a position of each of the first linear portions as viewed from the center of the coil coincides with a position of each of the adjustment linear portions corresponding to each of the first linear portions as viewed from the center in plan view.

According to the invention described in claim 9, in addition to the function of the invention described in any one of claims 1 to 8, an adjustment winding line including a plurality of adjustment linear portions and a plurality of adjustment curved portions is further provided, the overall shape in plan view of the adjustment winding line is a polygon identical to the overall shape in plan view of the first winding line or the second winding line, and the position of each first linear portion viewed from the center of the coil and the position of each adjustment linear portion corresponding to each of said first linear portions viewed from said center coincide with each other in plan view. Therefore, even in a case where the adjustment winding line is provided, the AC resistance as a coil can be reduced, and it is possible to concurrently achieve weight reduction and cost reduction, and improvement in transmission efficiency and prevention of an increase in operation temperature.

In order to solve the above-mentioned problem, the invention described in claim 10 is the coil according to claim 9, wherein the plurality of adjustment winding lines are laminated at the same position as the first winding line and the second winding line.

According to the invention described in claim 10, in addition to the function of the invention described in claim 9, since the plurality of adjustment winding lines are laminated at the same position as the first winding line and the second winding line, it is possible to concurrently achieve weight reduction and cost reduction, and improvement of transmission efficiency and prevention of an increase in operating temperature while effectively adjusting the current flowing through the first winding line and the second winding line.

In order to solve the above-mentioned problem, the invention described in claim 11 is the coil according to claim 10, wherein outermost circumference end portions of the plurality of adjustment winding lines are connected, a capacitance means configured to adjust the current is connected to innermost circumference portions of the plurality of adjustment winding lines, and a capacitance of the capacitance means is at least equal to or less than a threshold capacitance corresponding to a frequency of power transmission by the coil.

According to the invention described in claim 11, in addition to the function of the invention described in claim 10, the outermost circumference end portions of the plurality of adjustment winding lines are connected, the capacitance means for current adjustment is connected to the innermost circumference portions, and the capacitance is equal to or less than the threshold capacitance. Therefore, even in a case where the capacitance means for current adjustment is provided, it is possible to concurrently achieve weight reduction and cost reduction, and improvement of transmission efficiency and prevention of an increase in operation temperature.

In order to solve the above-mentioned problem, the invention described in claim 12 is a power transmission device included in a power transmission system including the power transmission device and a power reception device separated from the power transmission device, the power transmission system being configured to transmit power from the power transmission device to the power reception device in a non-contact manner, the power transmission device comprising: a power transmission coil that is the coil according to any one of claims 1 to 11, the power transmission coil being disposed to face the power reception device; and an output means configured to output power to be transmitted to the power transmission coil.

In order to solve the above-mentioned problem, the invention described in claim 13 is a power reception device included in a power transmission system including a power transmission device and the power reception device separated from the power transmission device, the power transmission system being configured to transmit power from the power transmission device to the power reception device in a non-contact manner, the power reception device comprising: a power reception coil that is the coil according to any one of claims 1 to 11, the power reception coil being disposed to face the power transmission device; and an input means connected to the power reception coil.

In order to solve the above-mentioned problem, the invention described in claim 14 is a non-contact power transmission system comprising: the power transmission device according to claim 12; and a power reception device separated from the power transmission device and disposed to face the power transmission coil, the power reception device being configured to receive power transmitted from the power transmission device.

In order to solve the above-mentioned problem, the invention described in claim 15 is a non-contact power transmission system comprising: a power transmission device; and the power reception device according to claim 13 separated from the power transmission device, the power reception coil being disposed to face the power transmission device, the power reception device being configured to receive power transmitted from the power transmission device.

According to the invention described in any one of claims 12 to 15, at least one of the power transmission coil included in the power transmission device and the power reception coil included in the power reception device included in the power transmission system is the coil described in any one of claims 1 to 11. Therefore, in a case where non-contact power transmission is performed by causing said power transmission coil or said power reception coil to be opposed, impedance as a coil due to the above-described skin effect or proximity effect can be reduced, and it is possible to concurrently achieve weight reduction and cost reduction, and improvement of transmission efficiency and prevention of an increase in operating temperature.

### Effects of The Invention

The present invention includes: a first winding line including a plurality of first linear portions and a plurality of first curved portions and made of a thin film conductor; and a second winding line including a plurality of second linear portions and a plurality of second curved portions, made of a thin film conductor, and laminated on the first winding line with an insulating layer interposed therebetween. Furthermore, the first winding line and the second winding line each have the same polygonal overall shape in plan view, and the position of at least a part of each first linear portion viewed from the coil center coincides with the position of at least a part of each second linear portion corresponding to at least a part of each first linear portion viewed from the coil center in plan view.

Therefore, it is possible to reduce impedance as a coil due to the so-called skin effect or proximity effect caused by forming the winding line with the thin film conductor for weight reduction and cost reduction, and it is possible to concurrently achieve weight reduction and cost reduction, and improvement in transmission efficiency and prevention of an increase in operation temperature.

### BRIEF DESCRIPTION OF THE DRAWINGS

Fig. 1 is a block figure illustrating a schematic configuration of a power transmission system according to a first embodiment.
Fig. 2 is a plan view (i) illustrating a structure of a coil of the first embodiment.
Fig. 3 is a plan view (ii) illustrating a structure of a coil of the first embodiment.
Fig. 4 is a plan view (iii) illustrating a structure of the coils of the first embodiment.
Fig. 5 is a plan view (i) illustrating a structure of a coil of a first known example.
Fig. 6 is a plan view (ii) illustrating a structure of a coil of the first known example.
Fig. 7 is a plan view (iii) illustrating a structure of the coils of the first known example.
Fig. 8 is a figure illustrating a relationship between a frequency and an impedance as an effect of the structure of the coils of the first embodiment.
Fig. 9 is a plan view (I) illustrating a structure of coils of a second embodiment, in which (a) is said plan view (i), and (b) is said plan view (ii).
Fig. 10 is a plan view (II) illustrating a structure of coils of the second embodiment, in which (a) is said plan view (iii), and (b) is said plan view (iv).
Fig. 11 is a circuit figure illustrating a schematic configuration of a power reception coil included in a power transmission system of a third embodiment.
Fig. 12 is a plan view (I) illustrating a structure of coils of the third embodiment, in which (a) is said plan view (i), and (b) is said plan view (ii).
Fig. 13 is a plan view (II) illustrating a structure of coils of the third embodiment, in which (a) is said plan view (iii), and (b) is said plan view (iv).
Fig. 14 is a plan view (v) illustrating a structure of the coils of the third embodiment.
Fig. 15 is a figure illustrating a relationship between capacitance and transmission efficiency as an effect of the configuration of the power reception coil of the third embodiment.
Fig. 16 is a figure illustrating a relationship between capacitance and loss (copper loss) as an effect of the structure of the power reception coil of the third embodiment.
Fig. 17 is a plan view illustrating a structure of coils of a fourth embodiment, in which (a) is said plan view (i), and (b) is said plan view (ii) .
Fig. 18 is a plan view (iii) illustrating a structure of the coils of the fourth embodiment.
Fig. 19 is a plan view illustrating a structure of coils of a fourth known example, in which (a) is said plan view (i), and (b) is said plan view (ii).
Fig. 20 is a plan view (iii) illustrating a structure of the coils of the fourth known example.
Fig. 21 is a figure illustrating an effect by the structure of the coils of the fourth embodiment, in which (a) is a figure illustrating a relationship between a frequency and a Q value as said effect, and (b) is a figure illustrating a relationship between a frequency and an inductance as said effect.
Fig. 22 is a plan view illustrating a structure of coils of a fifth embodiment, in which (a) is said plan view (i), and (b) is said plan view (ii) .
Fig. 23 is a plan view (iii) illustrating a structure of the coils of the fifth embodiment.
Fig. 24 is a plan view illustrating a structure of coils of a fifth known example, in which (a) is said plan view (i), and (b) is said plan view (ii).
Fig. 25 is a plan view (iii) illustrating a structure of the coils of the fifth known example.
Fig. 26 is a figure illustrating an effect by the structure of the coils of the fifth embodiment, in which (a) is a figure illustrating a relationship between a frequency and an inductance as said effect, and (b) is a figure illustrating a relationship between a frequency and an impedance as said effect, and (c) is a figure illustrating a relationship between a frequency and a Q value as said effect.

### EMBODIMENT FOR CARRYING OUT THE INVENTION

Next, embodiments of the present invention will be described with reference to the drawings. Note that each embodiment described below is an embodiment in a case where the present invention is applied to a power transmission system that transmits power for charging a storage battery mounted on an electric vehicle to the electric vehicle including said storage battery in a non-contact manner by a magnetic field resonance method.

Here, the power transmission system by the magnetic field resonance method of each embodiment includes a power transmission coil to be described later that transmits power, and a power reception coil to be described later that is disposed to face (that is, so as to face against) the power transmission coil while being separated from said power transmission coil and receives the power transmitted from the power transmission coil.

### (A) First embodiment

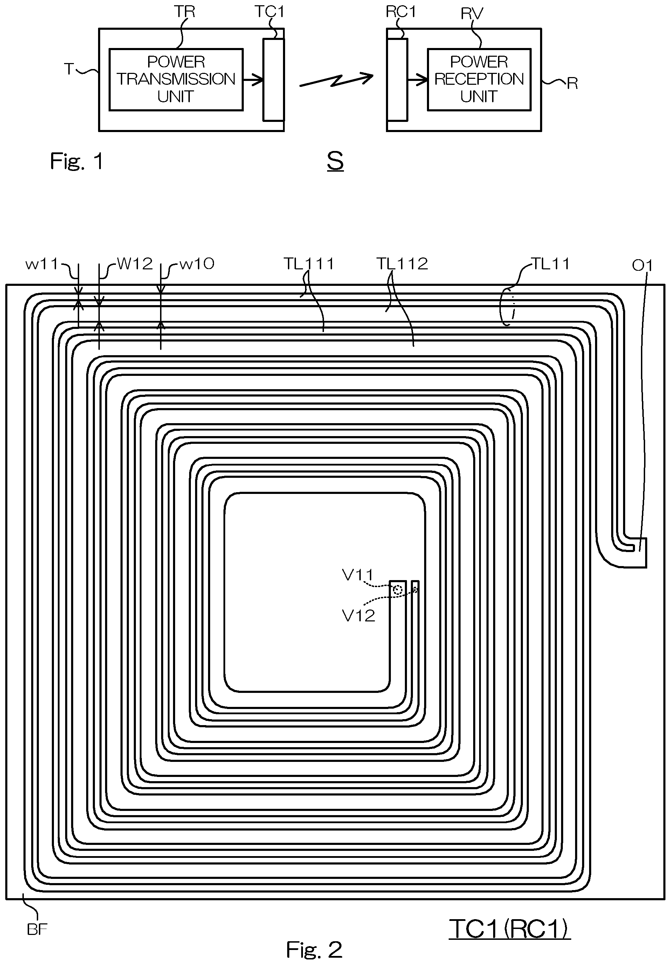

First, a first embodiment of the present invention will be described with reference to Figs. 1 to 8.

### (I) Overall configuration and operation of power transmission system of first embodiment

First, an overall configuration and operation of a power transmission system according to the first embodiment will be described with reference to Fig. 1. Note that Fig. 1 is a block figure illustrating a schematic configuration of a power transmission system according to the first embodiment.

As illustrated in Fig. 1, a power transmission system S according to the first embodiment is constituted of a power reception device R including a power reception unit RV and the above-described power reception coil RC1, and a power transmission device T including a power transmission unit TR and the above-described power transmission coil TC1. At this time, the power reception device R is mounted on said electric vehicle, and is connected to a storage battery (not illustrated) mounted on the above-described electric vehicle. Meanwhile, the power transmission device T is installed on the ground at a position where said electric vehicle moves or stops. Then, when said storage battery is charged, the electric vehicle is driven or stopped such that the power reception coil RC1 of the power reception device R and the power transmission coil TC1 of the power transmission device T face each other. Note that when the above-described storage battery is charged by the power transmission system S according to the first embodiment, power can be transmitted from the power transmission device T to the power reception device R mounted on a stopped electric vehicle via the power transmission coil TC1 of said power transmission device T installed on the ground below the stop position. In addition to the above, power may be continuously transmitted from a plurality of power transmission devices T to the power reception device R mounted on the moving electric vehicle via the power transmission coils TC1 of said plurality of power transmission devices T installed in a section of a certain distance of a road on which the electric vehicle is moving. At this time, the power transmission unit TR corresponds to an example of the "output means" of the present invention, and the power reception unit RV corresponds to an example of the "input means" of the present invention.

Then, power to be transmitted is input to the above-described power transmission coil TC1 from the power transmission unit TR. Then, the power reception coil RC1 outputs the power received from the power transmission coil TC1 by the magnetic field resonance method to the power reception unit RV. At this time, the power transmission coil TC1 or the power reception coil RC1 each correspond to an example of the "coil" of the present invention.

In the above configuration, the power transmission unit TR of the power transmission device T outputs the power to be transmitted to the power reception device R to the power transmission coil TC1 while complying with, for example, the laws and regulations such as the Radio Law in the country in which the power transmission system S is used, for example. At this time, for example, the above-described laws and regulations regulate the leakage magnetic field so as to be equal to or less than a predetermined level in consideration of the influence on the human body, for example. In addition, in order to enable interconnection utilization between all the power transmission devices T and the above-described power reception device R, it is consequently necessary for both the power transmission devices T and the power reception device R to use a frequency in a predetermined range determined in advance. For this reason, it is necessary for the frequency or frequency band in the above-described predetermined range to conform to recommendations of international organizations such as ISO (International Organization for Standardization) or IEC (International Electrotechnical Commission) as said laws and regulations, for example. In addition, since the lower limit value of the transmission efficiency in consideration of the predetermined positional deviation between the power transmission coil TC1 and the power reception coil RC1 is also defined by the above-described international organizations, high power transmission efficiency is also required for the power transmission system S.

Meanwhile, the power reception coil RC1 of the power reception device R that has received the power from the power transmission coil TC1 by the above-described magnetic field resonance method outputs said received power to the power reception unit RV. As a result, the power reception unit RV converts an output (which will be the above-described 85 kHz high-frequency power, for example) corresponding to said power into a DC (direct current) by, for example, a power conversion unit not illustrated, and outputs the DC current to a storage battery of the electric vehicle. As a result, said storage battery is charged with a necessary amount of power.

### (II) Configuration of power transmission coil TC1 (power reception coil RC1)

Next, configurations of the power transmission coil TC1 and the power reception coil RC1 of the first embodiment used in the power transmission system S of the first embodiment described above will be described with reference to Figs. 2 to 4. Note that the power transmission coil TC1 and the power reception coil RC1 of the first embodiment basically have the same configuration. Therefore, in the following description, a structure of power transmission coil TC1 will be described. Furthermore, Figs. 2 to 4 are plan views each illustrating a structure of the power transmission coil TC1 of the first embodiment, and are plan views when the power transmission coil TC is viewed from the power transmission unit TR side in the power transmission device T (see Fig. 1).

As illustrated in the plan view of Fig. 2, the power transmission coil TC1 of the first embodiment is configured such that a power transmission loop coil TL11 constituted of, for example, two parallel copper thin film lines TL111 and TL112 and a power transmission loop coil TL12 not illustrated in Fig. 2 are laminated in a direction perpendicular to the paper surface of Fig. 2 via an insulating film BF (details will be described later). In the above configuration, the power transmission loop coil TL11 corresponds to an example of the "first winding line" of the present invention, and the power transmission loop coil TL12 corresponds to an example of the "second winding line" of the present invention. In addition, the copper thin film line TL111 and the copper thin film line TL112 correspond to an example of the "first parallel winding line" of the present invention. Note that in the first embodiment, the film BF is used for insulation between the power transmission loop coil TL11 and the power transmission loop coil TL12, but an insulating material such as a glass epoxy material can also be used. Moreover, in order to efficiently dissipate the heat generated as the power transmission coil TC1, for example, a thinning material in which ceramic particles and the like are dispersed can also be used. It may further be configured to be laminated via the required voids using appropriate void-retaining materials. Furthermore, the winding center of the copper thin film line TL111 and the copper thin film line TL112 constituting the power transmission loop coil TL11 and the winding center of a copper thin film line to be described later constituting the power transmission loop coil TL12 coincide or substantially coincide with each other.

As illustrated in Fig. 2, the power transmission loop coil TL11 is constituted of the copper thin film line TL111 and the copper thin film line TL112 wound in parallel with each other in the same layer (the front surface of the film BF illustrated in Fig. 2) of the power transmission coil TC1, and has, on one side of the outermost circumference portion thereof, an external connection terminal O1 that connects the copper thin film line TL111 and the copper thin film line TL112 and is connected to the power transmission unit TR. The power transmission loop coil TL11 is configured by winding the copper thin film line TL111 and the copper thin film line TL112 six times (six turns) in parallel counterclockwise from the outermost circumference portions in Fig. 2, and the outer circumference end portion (the center of the right side portion in the case illustrated in Fig. 2) of each of the copper thin film line TL111 and the copper thin film line TL112 is connected to the above-described external connection terminal O1. In addition, the inner circumference end portions (the end portions on the center side of the power transmission coil TC1 in the case illustrated in Fig. 2) of the copper thin film line TL111 and the copper thin film line TL112 are connected to the copper thin film line constituting the power transmission loop coil TL12 formed on the back surface of the film BF for each of the copper thin film line TL111 and the copper thin film line TL112 through a via V11 and a via V12 penetrating the film BF. Note that the above-described copper thin film line TL111 has the same width w11 (see Fig. 2) and the same thickness over the entire circumference of the power transmission loop coil TL11. Furthermore, the copper thin film line TL112 also has the same width w12 (see Fig. 2) and the same thickness over the entire circumference of the power transmission loop coil TL11. Therefore, the width w10 (see Fig. 2) of each winding as the power transmission loop coil TL11 is also formed the same over the entire circumference of the power transmission loop coil TL11. In addition, in the power transmission loop coil TL11, the width w12 of the copper thin film line TL112 on the inner circumference side in one winding is formed wider than the width w11 of the copper thin film line TL111 on the outer circumference side in the one winding over the entire circumference. Furthermore, in each of the copper thin film line TL111 and the copper thin film line TL112, a linear portion is provided in each of the upper side portion, the lower side portion, the left side portion, and the right side portion in Fig. 2, and the respective linear portions are connected by a curved portion having a substantially concentric arc shape.

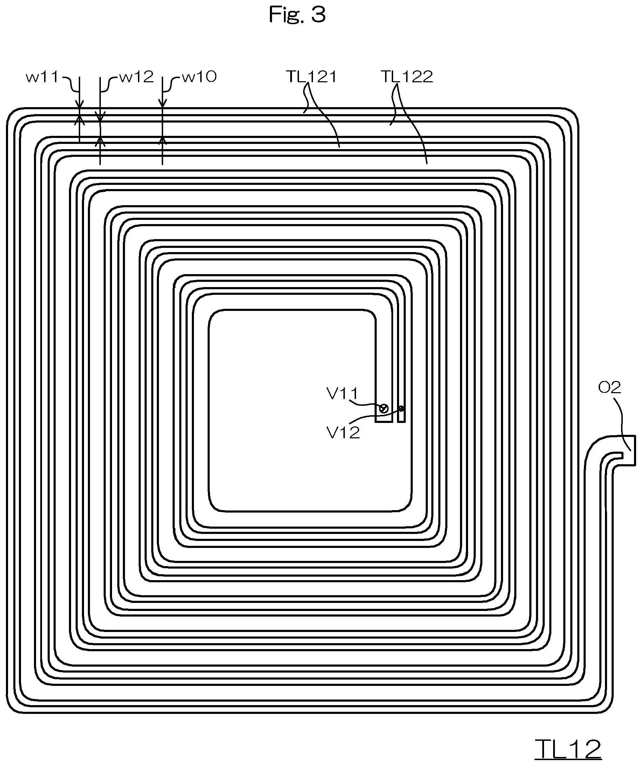

Next, a configuration of the power transmission loop coil TL12 laminated immediately below the above-described power transmission loop coil TL11 via the above-described film BF will be described with reference to Fig. 3. Note that Fig. 3 is a plan view illustrating only said power transmission loop coil TL12 taken out.

As illustrated in the plan view of Fig. 3, the power transmission loop coil TL12 laminated on the above-described power transmission loop coil TL11 with the film BF interposed therebetween is constituted of, for example, two parallel copper thin film lines TL121 and TL122. In this configuration, the copper thin film line TL121 and the copper thin film line TL122 correspond to an example of the "second parallel winding line" of the present invention. At this time, as described above, the winding center of the copper thin film line TL121 and the copper thin film line TL122 constituting the power transmission loop coil TL12 and the winding center of the copper thin film line TL111 and the copper thin film line TL112 constituting the above-described power transmission loop coil TL11 coincide or substantially coincide with each other. Furthermore, the overall shape of the power transmission loop coil TL12 is formed substantially square, which is the same as the overall shape of the power transmission loop coil TL11.

As illustrated in Fig. 3, the power transmission loop coil TL12 is constituted of the above-described copper thin film line TL121 and the above-described copper thin film line TL122 wound in parallel with each other in the same layer (the back surface of the film BF illustrated in Fig. 2) of the power transmission coil TC1, and has, on one side of the outermost circumference portion thereof, an external connection terminal 02 that connects the copper thin film line TL121 and the copper thin film line TL122 and is connected to the power transmission unit TR. Furthermore, the power transmission loop coil TL12 is configured by winding the copper thin film line TL121 and the copper thin film line TL122 six times (six turns) in parallel counterclockwise from the respective innermost circumference portions in Fig. 3, and the outer circumference end portion (the center of the right side portion in the case illustrated in Fig. 3) of each of the copper thin film line TL121 and the copper thin film line TL122 is connected to the above-described external connection terminal 02. Meanwhile, the inner circumference end portion (the end portion on the center side of the power transmission coil TC1 in the case illustrated in Fig. 3) of the copper thin film line TL121 is connected to the copper thin film line TL111 of the power transmission loop coil TL11 through the above-described via V12, and further, the inner circumference end portion of the copper thin film line TL122 is connected to the copper thin film line TL112 of the power transmission loop coil TL11 through the above-described via V11. Note that the above-described copper thin film line TL121 has the same width w11 and the same thickness over the entire circumference of the power transmission loop coil TL12. The copper thin film line TL122 also has the same width w12 and the same thickness over the entire circumference of the power transmission loop coil TL12. Therefore, the width w10 (see Fig. 3) of each winding as the power transmission loop coil TL12 is also formed the same over the entire circumference of the power transmission loop coil TL12. Furthermore, in the power transmission loop coil TL12, the width w12 of the copper thin film line TL122 on the inner circumference side in one winding is formed wider than the width w11 of the copper thin film line TL121 on the outer circumference side in the one winding over the entire circumference. Furthermore, in each of the copper thin film line TL121 and the copper thin film line TL122, a linear portion is provided in each of the upper side portion, the lower side portion, the left side portion, and the right side portion in Fig. 3, and the respective linear portions are connected by a curved portion having a substantially concentric arc shape.

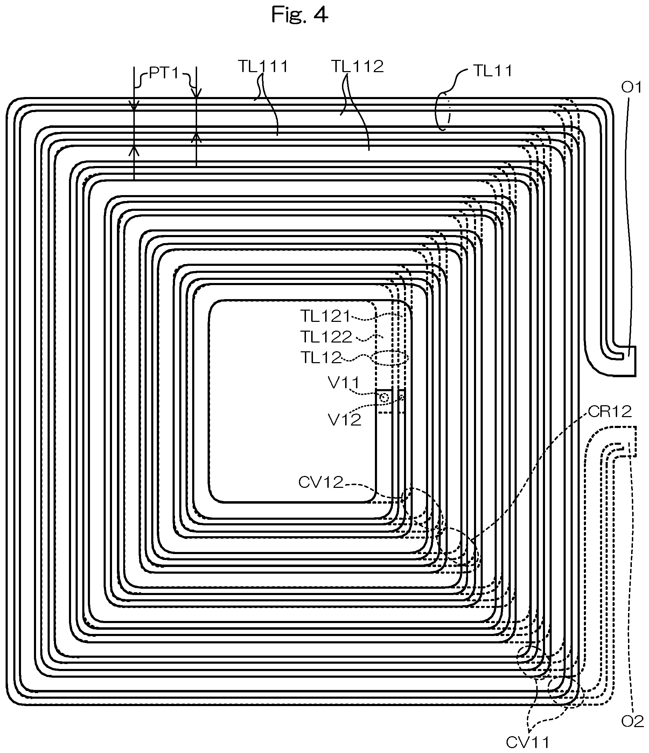

Next, a positional relationship between the above-described power transmission loop coil TL11 including the above-described copper thin film line TL111 and the above-described copper thin film line TL112 and the above-described power transmission loop coil TL12 including the above-described copper thin film line TL121 and the above-described copper thin film line TL122 will be described with reference to Fig. 4. Note that Fig. 4 is a plan view illustrating an overlapping state between the power transmission loop coil TL11 and the power transmission loop coil TL12, in which the power transmission loop coil TL11 is indicated by solid lines, and the power transmission loop coil TL12 laminated immediately therebelow via a film BF (not illustrated in Fig. 4) is indicated by broken lines.

As indicated by the solid lines in Fig. 4, in the power transmission loop coil TL11 including the copper thin film line TL111 and the copper thin film line TL112 wound in parallel from the outer periphery toward the inner periphery and connected at the innermost circumference portions thereof to the copper thin film line TL121 and the copper thin film line TL122 constituting the power transmission loop coil TL12 through the via V11 and the via V12, in only one curved portion (for example, a curved portion CV11 at the lower right corner portion in Fig. 4) among the above-described four curved portions included in the one winding, the copper thin film line TL111 and the copper thin film line TL112 are wound counterclockwise in such a manner that the position of the linear portion is shifted toward the inner circumference side by one pitch (that is, a distance in the radial direction of the power transmission coil TC1 in each winding of the copper thin film line TL111 and the copper thin film line TL112 adjacent to each other on each side. The same applies hereinafter. (see Fig. 4)) PT1 in each winding of the copper thin film line TL111 and the copper thin film line TL112 (that is, in a manner such that the winding transitions to the inner circumference side). As a result, the curved portion where the winding of the power transmission loop coil TL11 transitions to the inner circumference side by one pitch PT1 is, for example, six curved portions CV11 arranged from the outer circumference side to the inner circumference side at the lower right corner portion in Fig. 4.

On the other hand, in the power transmission loop coil TL12 formed in such a manner that the copper thin film line TL121 and the copper thin film line TL122 respectively connected at the innermost circumference portion thereof through via V11 and via V12 to the copper thin film line TL111 and the copper thin film line TL112 constituting the transmission loop coil TL11 are wound in parallel from the inner periphery to the outer periphery, as shown by a broken line in Fig. 4, in only one curved portion (for example, a curved portion CV12 at the lower right corner portion in Fig. 4) among the above-described four curved portions included in the one winding, the copper thin film line TL121 and the copper thin film line TL122 are wound counterclockwise (that is, in the same direction as the power transmission loop coil TL11) in such a manner that the positions of the linear portions are shifted to the outer circumference side (that is, in a manner such that the winding transitions to the outer circumference side) by one pitch PT1 in the winding of each of the copper thin film line TL121 and the copper thin film line TL122. As a result, the curved portion where the winding of the power transmission loop coil TL12 transitions to the outer circumference side by one pitch PT1 is, for example, six curved portions CV12 arranged from the inner circumference side to the outer circumference side at the lower right corner portion in Fig. 4. Furthermore, the outermost circumference portion of the power transmission loop coil TL11 on the right side in Fig. 4 is connected to the external connection terminal O1 having a shape protruding outward, and the outermost circumference portion of the power transmission loop coil TL12 on the right side in Fig. 4 is connected to the external connection terminal 02 having a shape protruding outward.

Since the power transmission loop coil TL11 and the power transmission loop coil TL12 each having the shape as described above are laminated as illustrated in Fig. 4, the position of the copper thin film line TL111 and the position of the copper thin film line TL121 when viewed from the center of the power transmission coil TC1 coincide except for the curved portion where each winding transitions and connection portions to the external connection terminal O1 and the external connection terminal 02. In the same manner, the position of the copper thin film line TL112 and the position of the copper thin film line TL122 as viewed from the center of the power transmission coil TC1 also coincide except for the curved portion where each winding transitions and the connection portions to the external connection terminal O1 and the external connection terminal 02. Therefore, as the power transmission coil TC1, the power transmission loop coil TL11 and the power transmission loop coil TL12 are laminated with the film BF or the like interposed therebetween in a state where at least each linear portion of the power transmission loop coil TL11 and at least each linear portion of the power transmission loop coil TL12 overlap each other. As a result, with respect to the counterclockwise winding from the outermost circumference portion (external connection terminal O1) to the innermost circumference portion of the power transmission loop coil TL11, the power transmission loop coil TL12 is connected at said innermost circumference portion so as to be in the same winding direction, and the power transmission loop coil TL12 is wound from the innermost circumference portion to the outermost circumference portion while maintaining the winding direction. With this structure, as the power transmission coil TC1 of the first embodiment, a current flows counterclockwise from the outermost circumference portion toward the innermost circumference portion in the power transmission loop coil TL11, and the current flows in the same counterclockwise direction from the innermost circumference portion toward the outermost circumference portion in the power transmission loop coil TL12.

### (III) Method of manufacturing power transmission coil TC1 and power reception coil RC1

Next, an outline of a method of manufacturing the power transmission coil TC1 and the power reception coil RC1 of the first embodiment will be described.

As said manufacturing method, a first manufacturing method including the following steps (a)-1 to (a)-6, a second manufacturing method including the following steps (b)-1 to (b)-12, or the like, which are basically similar to a known method, can be used.

### (a) First manufacturing method

(a)-1: Forming a copper thin film on the entire both surfaces of the film BF
(a)-2: Applying a resist onto each of the copper thin films (both surfaces) formed in the above-described (a)-1
(a)-3: Patterning the resist applied in the above-described (a)-2 onto the copper thin film line TL111 and the copper thin film line TL112 (the copper thin film line TL121 and the copper thin film line TL122) constituting the transmission loop coil TL11 (the transmission loop coil TL12) for each surface (at this time, patterning is performed in such a manner that the widths and thicknesses of the copper thin film line TL111 and the copper thin film line TL112 (the copper thin film line TL121 and the copper thin film line TL122) are the same from the outermost circumference end portion (the connection portion to the external connection terminal O1 (the external connection terminal 02)) of the power transmission loop coil TL11 (the power transmission loop coil TL12) to the portion where the via V11 and the via V12 at the innermost circumference end portions are connected, as described above)
(a)-4: After the patterning of the above-described (a)-3, performing etching treatment to form the copper thin film line TL111 and the copper thin film line TL112 (the copper thin film line TL121 and the copper thin film line TL122)
(a)-5: Forming the via V11 and the via V12 connecting the power transmission loop coil TL11 and the power transmission loop coil TL12, and forming the power transmission loop coil TC1 including the external connection terminal O1 and the external connection terminal 02
(a)-6: Connecting the external connection terminal O1 and the external connection terminal 02 to the power transmission unit TR (in the case of the power transmission device T) or the power reception unit RV (in the case of the power reception device R)

### (b) Second manufacturing method

(b)-1: Forming a copper thin film on the entire both surfaces of the film BF
(b)-2: Forming a through hole by a laser or the like at a position corresponding to each of the via V11 and the via V12.
(b)-3: Performing copper plating processing by an electroless copper plating method and an electrolytic copper plating method on the entire area including said through hole to form the above-described via V11 and the above-described via V12
(b)-4: Applying a resist onto each of the copper plating (both surfaces) formed in the above-described (b)-3
(b)-5: Pattering the resist applied in the above-described (b)-4 on the copper thin film line TL111 and the copper thin film line TL112 (the copper thin film line TL121 and the copper thin film line TL122) constituting the power transmission loop coil TL11 (the power transmission loop coil TL12) in the same manner as in the above (a)-3 for each surface.
(b)-6: After the patterning of the above-described (b)-5, performing an etching process to form the external connection terminal O1 (the external connection terminal 02), the copper thin film line TL111, and the copper thin film line TL112 (the copper thin film line TL121 and the copper thin film line TL122)
(b)-7: Connecting the external connection terminal O1 and the external connection terminal 02 to the power transmission unit TR (in the case of the power transmission device T) or the power reception unit RV (in the case of the power reception device R)

### First example

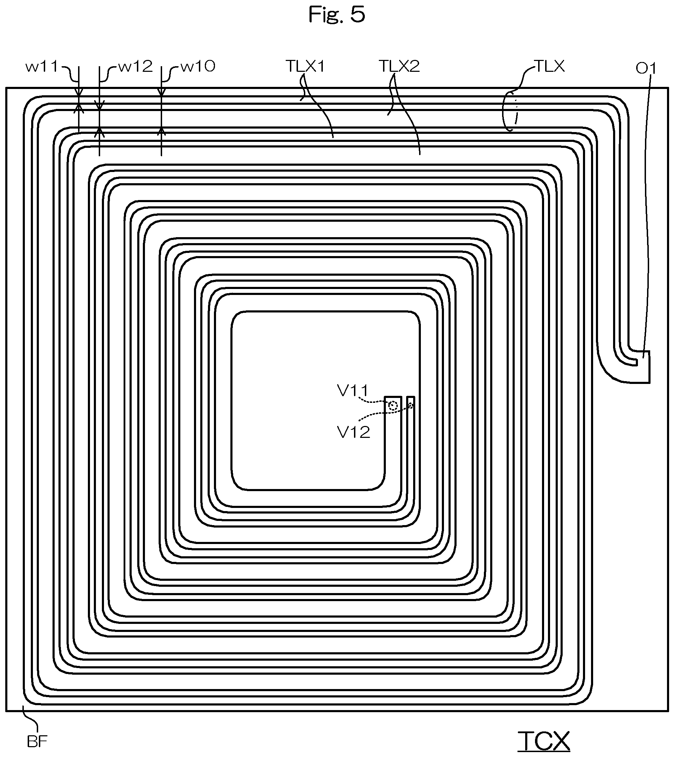

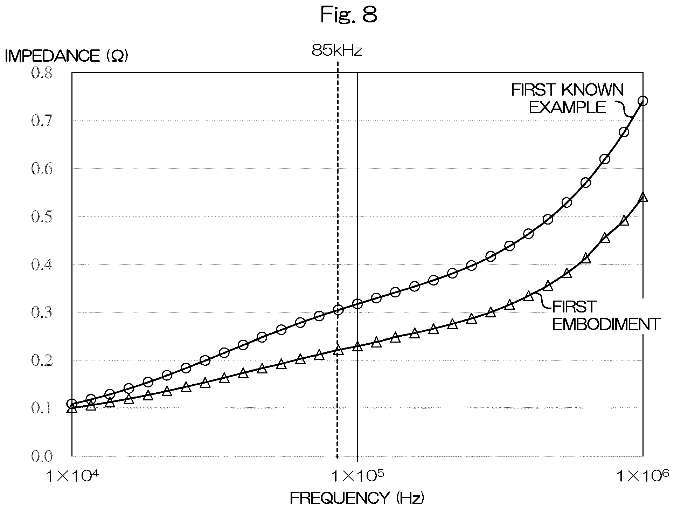

Next, results (simulation results) of measuring the impedance of the power transmission coil TC1 or the power reception coil RC1 as the power transmission system S using the power transmission coil TC1 or the power reception coil RC1 of the first embodiment having the configuration illustrated in Figs. 2 to 4 by changing the frequency of the power transmission will be described as a first example with reference to Figs. 5 to 8 in comparison with the power transmission coil (power reception coil) of a first known example. Note that Figs. 5 to 7 are plan views each illustrating a structure of a coil of the first known example, and Fig. 8 is a view illustrating a relationship between a frequency and an impedance as an effect of the structure of the power transmission coil TC1 or the power reception coil RC1 of the first embodiment.

Here, before describing the above-described first example, an outline of a configuration of a power transmission coil or a power reception coil of the first known example to be compared will be described with reference to Figs. 5 to 7. Note that the power transmission coil and the power reception coil of the first known example basically have the same configuration. Therefore, in the following description, a structure of the power transmission coil of the first known example will be described. In addition, Figs. 5 to 7 are plan views illustrating a structure of a power transmission coil of the first known example when viewed from the same viewpoint as the power transmission coil TC1 of the first embodiment (see Fig. 1). At this time, in Figs. 5 to 7, the same members as those of the power transmission coil TC1 of the first embodiment are denoted by the same member numbers, and detailed description is omitted.

As illustrated in the plan view of Fig. 5, a power transmission coil TCX of the first known example is configured in such a manner that a power transmission loop coil TLX including two parallel copper thin film lines TLX1 and TLX2 and a power transmission loop coil TLY not illustrated in Fig. 5 are laminated in a direction perpendicular to the paper surface of Fig. 5 via an insulating film BF same as that in the power transmission coil TC1 of the first embodiment. At this time, the winding center of the copper thin film line TLX1 and the copper thin film line TLX2 constituting the power transmission loop coil TLX and the winding center of a copper thin film line to be described later constituting the power transmission loop coil TLY coincide or substantially coincide with each other.

As illustrated in Fig. 5, the power transmission loop coil TLX is constituted of the copper thin film line TLX1 and the copper thin film line TLX2 wound in parallel with each other in the same layer (the front surface of the film BF illustrated in Fig. 5) of the power transmission coil TCX, and has, on one side of the outermost circumference portion thereof, an external connection terminal O1 that connects the copper thin film line TLX1 and the copper thin film line TLX2. The power transmission loop coil TLX is configured by winding the copper thin film line TLX1 and the copper thin film line TLX2 six times (six turns) in parallel counterclockwise from the outermost circumference portion in Fig. 5, and the outer circumference end portion (the center of the right side portion in the case illustrated in Fig. 5) of each of the copper thin film line TLX1 and the copper thin film line TLX2 is connected to the above-described external connection terminal O1. In addition, the inner circumference end portions (the end portions on the center side of the power transmission coil TCX in the case illustrated in Fig. 5) of the copper thin film line TLX1 and the copper thin film line TLX2 are connected to the copper thin film line constituting the power transmission loop coil TLY formed on the back surface of the film BF for each of the copper thin film line TLX1 and the copper thin film line TLX2 through a via V11 and a via V12 penetrating the film BF. Note that the above-described copper thin film line TLX1 has the same width w11 (see Figs. 2 and 5) and the same thickness over the entire circumference of the power transmission loop coil TLX. The copper thin film line TLX2 also has the same width w12 (see Figs. 2 and 5) and the same thickness over the entire circumference of the power transmission loop coil TLX. Therefore, the width w10 (see Figs. 2 and 5) of each winding as the power transmission loop coil TLX is also formed the same over the entire circumference of the power transmission loop coil TLX. Furthermore, in the power transmission loop coil TLX, the width w12 of the copper thin film line TLX2 on the inner circumference side in one winding is formed wider than the width w11 of the copper thin film line TLX1 on the outer circumference side in one winding over the entire circumference. Furthermore, in each of the copper thin film line TLX1 and the copper thin film line TLX2, a linear portion is provided in each of the upper side portion, the lower side portion, the left side portion, and the right side portion in Fig. 5, and the respective linear portions are connected by a curved portion having a substantially concentric arc shape.

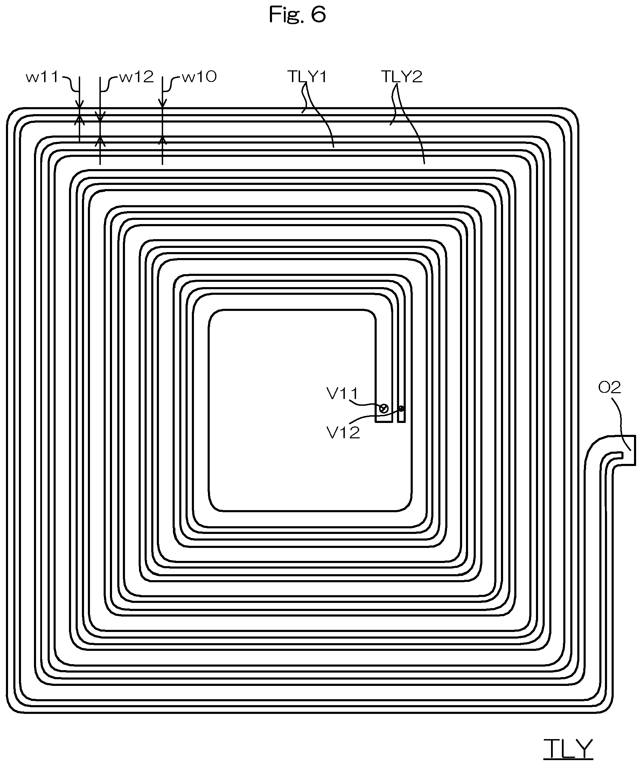

Next, a configuration of the power transmission loop coil TLY laminated immediately below the above-described power transmission loop coil TLX via the above-described film BF will be described with reference to Fig. 6. Note that Fig. 6 is a plan view illustrating only said power transmission loop coil TLY taken out.

As illustrated in the plan view of Fig. 6, the power transmission loop coil TLY laminated on the above-described power transmission loop coil TLX with the film BF interposed therebetween is constituted of two parallel copper thin film lines TLY1 and TLY2. At this time, the winding center of the copper thin film line TLY 1 and the copper thin film line TLY2 constituting the power transmission loop coil TLY and the winding center of the copper thin film line TLX 1 and the copper thin film line TLX2 constituting the above-described power transmission loop coil TLX coincide or substantially coincide with each other. Furthermore, the overall shape of the power transmission loop coil TLY is formed substantially square, which is the same as the overall shape of the power transmission loop coil TLX.

As illustrated in Fig. 6, the power transmission loop coil TLY is constituted of the above-described copper thin film line TLY 1 and the above-described copper thin film line TLY2 wound in parallel with each other in the same layer (the back surface of the film BF illustrated in Fig. 5) of the power transmission coil TCX, and has, on one side of the outermost circumference portion thereof, an external connection terminal 02 that connects the copper thin film line TLY 1 and the copper thin film line TLY2. Furthermore, the power transmission loop coil TLY is configured by winding the copper thin film line TLY 1 and the copper thin film line TLY2 six times (six turns) in parallel counterclockwise from the respective innermost circumference portions in Fig. 6, and the outer circumference end portion (the center of the right side portion in the case illustrated in Fig. 6) of each of the copper thin film line TLY 1 and the copper thin film line TLY2 is connected to the above-described external connection terminal 02. Meanwhile, the inner circumference end portion (the end portion on the center side of the power transmission coil TCY in the case illustrated in Fig. 6) of the copper thin film line TLY1 is connected to the copper thin film line TLX1 of the power transmission loop coil TLX through the above-described via V12, and further, the inner circumference end portion of the copper thin film line TLY2 is connected to the copper thin film line TLX2 of the power transmission loop coil TLX through the above-described via V11. Note that the above-described copper thin film line TLY1 has the same width w11 and the same thickness over the entire circumference of the power transmission loop coil TLY. In addition, the copper thin film line TLY2 also has the same width w12 and the same thickness over the entire circumference of the power transmission loop coil TLY. Therefore, the width w10 (see Fig. 6) of each winding as the power transmission loop coil TLY is also formed the same over the entire circumference of the power transmission loop coil TLY. Furthermore, in the power transmission loop coil TLY, the width w12 of the copper thin film line TLY2 on the inner circumference side in one winding is formed wider than the width w11 of the copper thin film line TLY1 on the outer circumference side in one winding over the entire circumference. Furthermore, in each of the copper thin film line TLY1 and the copper thin film line TLY2, a linear portion is provided in each of the upper side portion, the lower side portion, the left side portion, and the right side portion in Fig. 6, and the respective linear portions are connected by a curved portion having a substantially concentric arc shape.

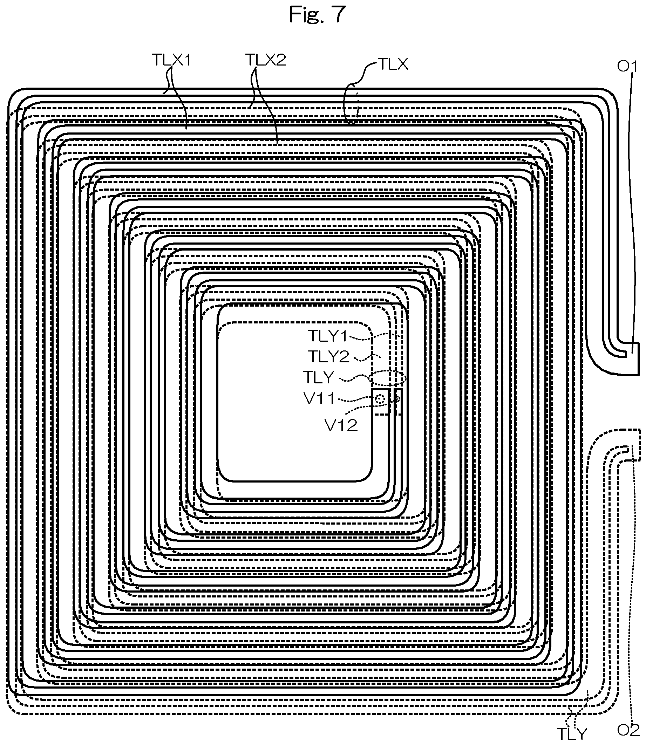

Next, a positional relationship between the above-described power transmission loop coil TLX including the above-described copper thin film line TLX1 and the above-described copper thin film line TLX2 and the above-described power transmission loop coil TLY including the above-described copper thin film line TLY1 and the above-described copper thin film line TLY2 will be described with reference to Fig. 7. Note that Fig. 7 is a plan view illustrating an overlapping state between the power transmission loop coil TLX and the power transmission loop coil TLY, in which the power transmission loop coil TLX is indicated by solid lines, and the power transmission loop coil TLY laminated immediately therebelow via the film BF (not illustrated in Fig. 7) is indicated by broken lines.

As indicated by the solid lines in Fig. 7, in the power transmission loop coil TLX including the copper thin film line TLX1 and the copper thin film line TLX2 wound in parallel from the outer periphery toward the inner periphery and connected at the innermost circumference portions thereof to the copper thin film line TLY 1 and the copper thin film line TLY2 constituting the power transmission loop coil TLY through the via V11 and the via V12, each curved portion is formed such that the position of the linear portion is shifted to the inner circumference side by a quarter of the above-described pitch PT 1 every quarter turn (that is, in such a manner that the winding transitions to the inner circumference side), and the copper thin film line TLX1 and the copper thin film line TLX2 are wound counterclockwise.

On the other hand, in the power transmission loop coil TLY formed in such a manner that the copper thin film line TLY 1 and the copper thin film line TLY2 respectively connected at the innermost circumference portions thereof through the via V11 and via V12 to the copper thin film line TLX1 and the copper thin film line TLX2 constituting the transmission loop coil TLX are wound in parallel from the inner periphery to the outer periphery, as illustrated by a broken line in Fig. 7, each curved portion is formed such that the position of the linear portion is shifted to the outer circumference side by a quarter of the above-described pitch PT1 (that is, the winding transitions to the outer circumference side) for every quarter turn, and the copper thin film line TLY 1 and the copper thin film line TLY2 are wound counterclockwise (that is, in the same direction as the power transmission loop coil TLX). Furthermore, the outermost circumference portion of the power transmission loop coil TLX on the right side in Fig. 7 is connected to the external connection terminal O1 having a shape protruding outward, and the outermost circumference portion of the power transmission loop coil TLY on the right side in Fig. 7 is connected to the external connection terminal 02 having a shape protruding outward.

Since the power transmission loop coil TLX and the power transmission loop coil TLY having the above-described shapes are laminated as illustrated in Fig. 7, the position of the copper thin film line TLX1 and the position of the copper thin film line TLY 1 as viewed from the center of the power transmission coil TCX are different as illustrated in Fig. 7. In the same manner, the position of the copper thin film line TLX2 and the position of the copper thin film line TLY2 as viewed from the center of the power transmission coil TCX are also different as illustrated in Fig. 7. Therefore, as the power transmission coil TCX, the power transmission loop coil TLX and the power transmission loop coil TLY are laminated with the film BF interposed therebetween in a state where the power transmission loop coil TLX and the power transmission loop coil TLY do not overlap each other. As a result, with respect to the counterclockwise winding from the outermost circumference portion (external connection terminal O1) to the innermost circumference portion of the power transmission loop coil TLX, the power transmission loop coil TLY is connected at said innermost circumference portion so as to be in the same winding direction, and the power transmission loop coil TLY is wound from the innermost circumference portion to the outermost circumference portion while maintaining the winding direction. With this structure, as the power transmission coil TCX of the first known example, a current flows counterclockwise from the outermost circumference portion toward the innermost circumference portion in the power transmission loop coil TLX, and the current flows in the same counterclockwise direction from the innermost circumference portion toward the outermost circumference portion in the power transmission loop coil TLY.

In addition, the other specifications of each of the power transmission coil TC1 of the first embodiment and the power transmission coil TCX of the first known example used in the experiment of the first example are as follows. Note that in the following description, the specifications of the power transmission coil TC1 and the power transmission coil TCX will be described, but the specifications of the power reception coil RC1 of the first embodiment used in the experiment are the same as the specifications of the power transmission coil TC1, and the specifications of the power reception coil of the first known example are the same as the specifications of the power transmission coil TCX.
- Sizes of the power transmission coil TC1 (power reception coil RC1) and the power transmission coil TCX (and the power reception coil of first known example): 280 mm × 280 mm
- Pitch PT1: 15 mm
- Thickness of the copper thin film line in the copper thin film line TL111 and the like: 0.2 mm

As illustrated in Fig. 8, in the vicinity of the frequency (85 kilohertz) used for power transmission by the power transmission system S, it can be seen that the impedance is lower by about two-thirds in the case of using the power transmission coil TC1 and the power reception coil RC1 of the first embodiment than in the case of using the power transmission coil TCX and the power reception coil of the first known example. In this regard, it has been found by the inventor of the present application that said impedance is preferably less than 0.5 ohms when the above-described power transmission is performed at a frequency of 85 kilohertz. Even in view of this point, it can be said that the configurations (that is, a configuration in which the copper thin film lines constituting each of the coils overlap each other) such as the above-described power transmission coil TC1 and the above-described power reception coil RC1 are more preferable for reducing the impedance.

As respectively described above, according to the power transmission using the power transmission system S of the embodiment including the power transmission coil TC1 and the power reception coil RC1 of the first embodiment, the power transmission coil TC1 (power reception coil RC1) has a configuration in which the power transmission loop coil TL11 (winding from the outer periphery to the inner periphery) and the power transmission loop coil TL12 (winding from the inner periphery to the outer periphery) made of the copper thin film line TL111 or the like having a plurality of linear portions and a plurality of curved portions are laminated with the film BF interposed therebetween. Furthermore, each of the overall shapes in plan view of the power transmission loop coil TL11 and the power transmission loop coil TL12 is a mutually identical substantially square shape (may be any polygonal shape other than square shapes) and a position of the power transmission loop coil TL11 viewed from the center of the power transmission coil TC1 (power reception coil RC1) of each winding coincides with a position of the power transmission loop coil TL12 viewed from the center of the power transmission coil TC1 (power reception coil RC1) of each winding in plan view (see Fig. 4). Therefore, it is possible to reduce the impedance due to the so-called skin effect or proximity effect caused by forming the power transmission coil TC1 and the power reception coil RC1 by the copper thin film line for weight reduction and cost reduction, and it is possible to concurrently achieve weight reduction and cost reduction, and improvement in transmission efficiency and prevention of an increase in operation temperature.

In addition, in the winding of the power transmission loop coil TL11, the winding transition of one winding is performed only in one curved portion (CV11 (see Fig. 4)) included in one winding, and in the winding of the power transmission loop coil TL12, the winding transition of one winding is performed only in one curved portion (CV12 (see Fig. 4)) included in one winding. Therefore, the positions of the corresponding thin film conductors viewed from the center of the power transmission coil TC1 and the power reception coil RC1 can be reliably matched with each other in plan view.

Furthermore, since the power transmission loop coil TL11 is constituted of the copper thin film line TL1 11 and the copper thin film line TL112, and the power transmission loop coil TL12 is constituted of the copper thin film line TL121 and the copper thin film line TL122, the impedance can be further reduced, so that it is possible to further concurrently achieve weight reduction and cost reduction, and improvement in transmission efficiency and prevention of an increase in operating temperature.

Furthermore, since the width w12 of the copper thin film line TL112 (copper thin film line TL122) on the inner circumference side is formed wider than the width w11 of the copper thin film line TL111 (copper thin film line TL121) on the outer circumference side, the impedance can be further reduced, so that it is possible to further concurrently achieve weight reduction and cost reduction, and improvement in transmission efficiency and prevention of an increase in operation temperature.

### (B) Second embodiment

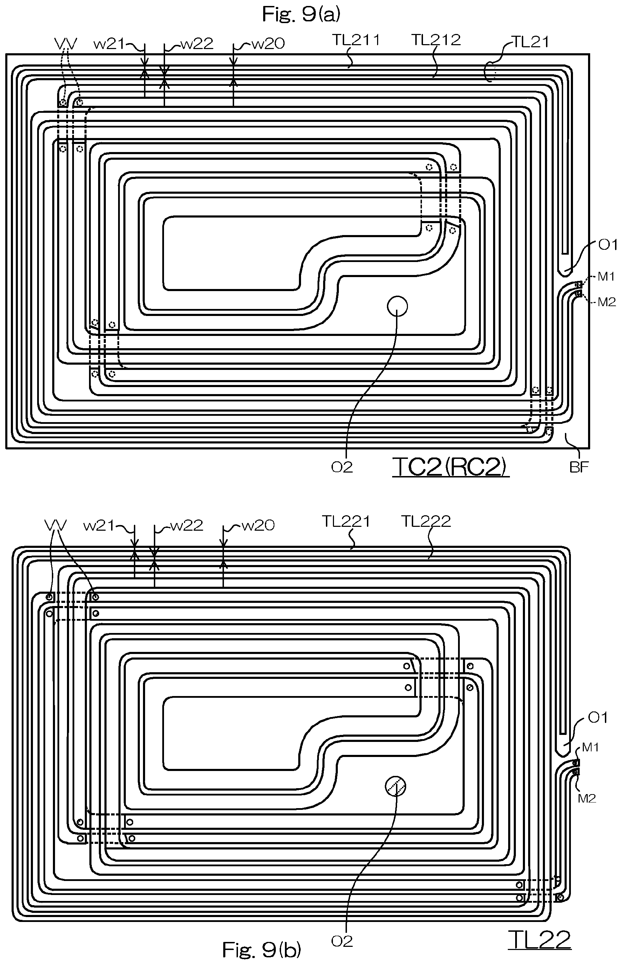

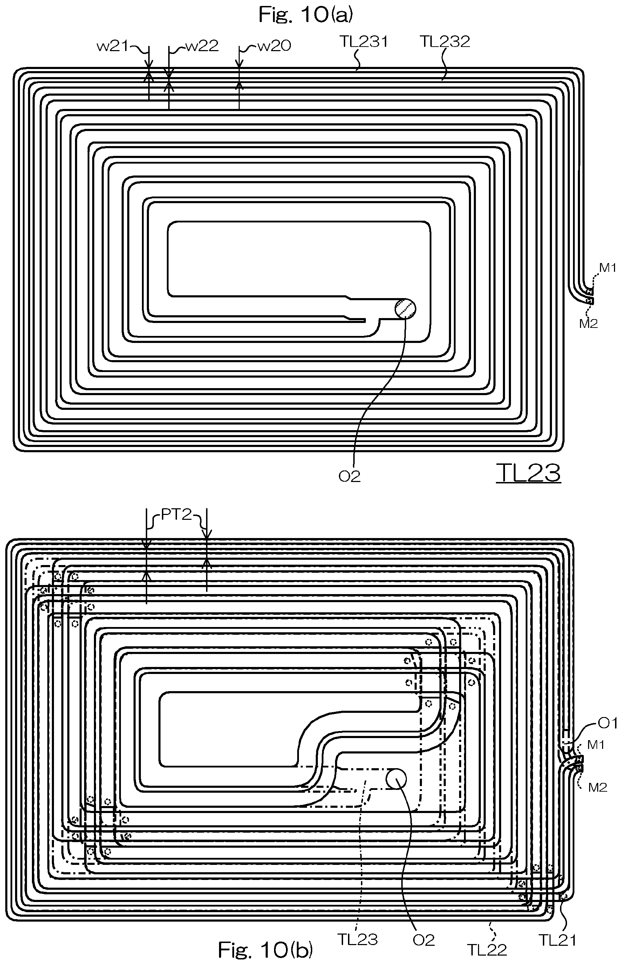

Next, a second embodiment of the present invention will be described with reference to Figs. 9 and 10. Note that Figs. 9 and 10 are plan views illustrating the structures of coils of the second embodiment.

In the power transmission coil TC1 (power reception coil RC1) of the first embodiment described above, the case has been described where the power transmission loop coil TL11 is constituted of the copper thin film line TL111 and the copper thin film line TL121 wound in parallel in one layer (the front surface of the film BF) of the power transmission coil TC1, and further, the power transmission loop coil TL12 includes the copper thin film line TL121 and the copper thin film line TL122 wound in parallel in another layer (the back surface of the film BF) of the power transmission coil TC1 (see Figs. 2 to 4). In contrast, in a power transmission coil (and a power reception coil) of the second embodiment to be described below, a first power transmission loop coil made of a copper thin film line wound from an outer circumference side to an inner circumference side, and a second power transmission loop coil made of a copper thin film line wound from said inner circumference side to said outer circumference side, the second power transmission loop coil being connected in series to the above-described first power transmission loop coil, are formed in accordance with one layer in the power transmission coil (and the power reception coil), and two such layers are laminated to constitute the power transmission coil (and the power reception coil). In addition to the above, in the power transmission coil (and the power reception coil) of the second embodiment, a coil for current adjustment (hereinafter, referred to as a "current adjustment coil") is connected in series to the above-described first power transmission loop coil and second power transmission loop coil.

Note that the configurations of the power transmission coil of the second embodiment and the power reception coil of the second embodiment are basically the same, and further, the configurations of the power reception loop coil in the power reception coil of the second embodiment and the power transmission loop coil in the power transmission coil of the second embodiment are the same. Furthermore, the configurations of the current adjustment coil in the power transmission coil of the second embodiment and the current adjustment coil in the power reception coil of the second embodiment are also the same. Therefore, in the following description, only the configuration of the power transmission coil of the second embodiment will be described. At this time, the same constituent members as those of the power transmission coil TC1 of the first embodiment are denoted by the same member numbers, and detailed description thereof is omitted.

That is, as illustrated in the plan view of Fig. 9(a), a power transmission coil TC2 of the second embodiment is configured by laminating a power transmission loop coil TL21 (corresponding to the above-described first power transmission loop coil and the above-described second power transmission loop coil) configured by two parallel copper thin film lines TL211 and TL212 and a power transmission loop coil TL22 illustrated in the plan view of Fig. 9(b) in a direction perpendicular to the paper surface of Fig. 9 via an insulating film BF. In addition, the winding center of the copper thin film line TL211 and the copper thin film line TL212 constituting the power transmission loop coil TL21 and the winding center of the copper thin film line TL221 and the copper thin film line TL222 (see Fig. 9(b)) constituting the power transmission loop coil TL22 coincide or substantially coincide with each other.

As illustrated in Fig. 9(a), the power transmission loop coil TL21 is constituted of the copper thin film line TL211 and the copper thin film line TL212 wound in parallel with each other in the same layer (the front surface of the film BF illustrated in Fig. 9(a)) of the power transmission coil TC2, and has an external connection terminal O1 for connecting the copper thin film line TL211 and the copper thin film line TL212 to one side of the outermost circumference portion (the center of the right side portion in the case illustrated in Fig. 9 (a)) and for connecting to the power transmission unit TR, and a connection terminal M1 and a connection terminal M2 for separately connecting the copper thin film line TL211 and the copper thin film line TL212 to a current adjustment coil of the second embodiment to be described later. Furthermore, the power transmission loop coil TL21 is configured in such a manner that the copper thin film line TL211 and the copper thin film line TL212 are wound twice and a half times (two and a half turns) in parallel counterclockwise from the external connection terminal O1 of the outermost circumference portion to the innermost circumference portion thereof in Fig. 9(a), and are further wound twice and a half times (two and a half turns) in parallel counterclockwise from said innermost circumference portion to the connection terminal M1 and the connection terminal M2 in the same manner. In addition, the intersection portions in the winding of the copper thin film line TL211 and the copper thin film line TL212 intersect at four points (see Fig. 9(a)) while being insulated from each other by a laminated structure in which the insulating layer is sandwiched and each of said copper thin film line TL211 and copper thin film line TL212 is conducted through a via W, a method using a jumper wire, or the like. Furthermore, in each of the copper thin film line TL211 and the copper thin film line TL212, a linear portion is provided in each of the upper side portion, the lower side portion, the left side portion, and the right side portion in Fig. 9(a), and the respective linear portions are connected by a curved portion having a substantially concentric arc shape. Note that a width w21 of the above-described copper thin film line TL211 is formed wider toward the inner circumference side of the power transmission coil TC2. The width w21 is the same in each linear portion constituting the copper thin film line TL211, and the width w21 is changed (that is, the width is changed so as to be wider toward the inner circumference side of power transmission coil TC2) in each curved portion connecting said linear portions. On one hand, the thickness of the above-described copper thin film line TL211 is the same over the entire circumference of the power transmission loop coil TL21. On the other hand, a width w22 of the above-described copper thin film line TL212 is also formed wider toward the inner circumference side of the power transmission coil TC2 in the same manner as the width w21. The width w22 is the same in each linear portion constituting the copper thin film line TL212, and the width w22 is changed (that is, the width is changed so as to be wider toward the inner circumference side of power transmission coil TC2) in each curved portion connecting said linear portions. Meanwhile, the thickness of the above-described copper thin film line TL212 is the same over the entire circumference of the power transmission loop coil TL21. With the above configuration, a width w20 (see Fig. 9(a)) of each winding as the power transmission loop coil TL21 is also formed wider toward the inner circumference side of the power transmission coil TC2. Furthermore, in the power transmission loop coil TL21, the width w22 of the copper thin film line TL212 on the inner circumference side in one winding is formed wider than the width w21 of the copper thin film line TL211 on the outer circumference side in the one winding over the entire circumference.

Next, a configuration of the power transmission loop coil TL22 laminated immediately below the above-described power transmission loop coil TL21 via the above-described film BF will be described with reference to Fig. 9(b). Note that Fig. 9(b) is a plan view illustrating only said power transmission loop coil TL22 taken out. The overall shape of the power transmission loop coil TL22 is formed substantially rectangular, which is the same as the overall shape of the power transmission loop coil TL21.

As illustrated in the plan view of Fig. 9(b), the power transmission loop coil TL22 laminated on the above-described power transmission loop coil TL21 with the film BF interposed therebetween is constituted of a copper thin film line TL221 and a copper thin film line TL222 wound in parallel with each other in the same layer (the back surface of the film BF illustrated in Fig. 9(a)) of the power transmission coil TC2, and has an external connection terminal O1 for connecting the copper thin film line TL221 and the copper thin film line TL222 to one side of the outermost circumference portion (the center of the right side portion in the case illustrated in Fig. 9(b)) and for connecting to the power transmission unit TR in parallel with the power transmission loop coil TL21, and a connection terminal M1 and a connection terminal M2 for separately connecting the copper thin film line TL221 and the copper thin film line TL222 to the current adjustment coil of the second embodiment. At this time, the above-described external connection terminal O1, the connection terminal M1, and the connection terminal M2 are the same as the external connection terminal O1, the connection terminal M1, and the connection terminal M2 illustrated in Fig. 9(a). Furthermore, the power transmission loop coil TL22 is configured in such a manner that the copper thin film line TL221 and the copper thin film line TL222 are wound twice and a half times (two and a half turns) in parallel counterclockwise from the external connection terminal O1 of the outermost circumference portion to the innermost circumference portion thereof in Fig. 9(b), and are further wound twice and a half times (two and a half turns) in parallel counterclockwise from said innermost circumference portion to the connection terminal M1 and the connection terminal M2 in the same manner. In addition, the intersection portions in the winding of the copper thin film line TL221 and the copper thin film line TL222 intersect at four locations (see Fig. 9(b)) while being insulated from each other by a laminated structure in which the insulating layer is sandwiched and each of said copper thin film line TL221 and copper thin film line TL222 is conducted through a via W, a method using a jumper wire, or the like. Furthermore, in each of the copper thin film line TL221 and the copper thin film line TL222, a linear portion is provided in each of the upper side portion, the lower side portion, the left side portion, and the right side portion in Fig. 9(b), and the respective linear portions are connected by a curved portion having a substantially concentric arc shape. Note that the width w21 of the above-described copper thin film line TL221 is the same as the width w21 of the copper thin film line TL211 illustrated in Fig. 9(a), and is formed wider toward the inner circumference side of the power transmission coil TC2. The width w21 is the same in each linear portion constituting the copper thin film line TL221, and the width w21 is changed (that is, the width is changed so as to be wider toward the inner circumference side of power transmission coil TC2) in each curved portion connecting said linear portions. On one hand, the thickness of the above-described copper thin film line TL221 is the same over the entire circumference of the power transmission loop coil TL22. On the other hand, the width w22 of the above-described copper thin film line TL222 is the same as the width w22 of the copper thin film line TL212 of the power transmission loop coil TL21 illustrated in Fig. 9(a), and is formed wider toward the inner circumference side of the power transmission coil TC2 in the same manner as the width w21 of the copper thin film line TL221. The width w22 is the same in each linear portion constituting the copper thin film line TL222, and said width w22 is changed (that is, the width is changed so as to be wider toward the inner circumference side of power transmission coil TC2) in each curved portion connecting said linear portions. Meanwhile, the thickness of the above-described copper thin film line TL222 is the same over the entire circumference of the power transmission loop coil TL21. With the above configuration, the width w20 (same as the width w20 of the power transmission loop coil TL21 illustrated in Fig. 9(a). See Fig. 9(b).) of each winding as the power transmission loop coil TL22 is also formed wider toward the inner circumference side of the power transmission coil TC2. Furthermore, in the power transmission loop coil TL22, the width w22 of the copper thin film line TL222 on the inner circumference side in one winding is formed wider than the width w21 of the copper thin film line TL221 on the outer circumference side in the one winding over the entire circumference.

Next, in the power transmission coil TC2 of the second embodiment, a configuration of a current adjustment coil further laminated immediately below the above-described power transmission loop coil TL22 via a film not illustrated (configured of the same material and the like as the above-described film BF) will be described with reference to Fig. 10(a). Note that Fig. 10(a) is a plan view illustrating only said current adjustment coil taken out. In addition, the overall shape of the current adjustment coil is formed substantially rectangular, which is the same as the overall shape of each of the power transmission loop coil TL21 and the power transmission loop coil TL22.

As illustrated in the plan view of Fig. 10(a), a current adjustment coil TL23 laminated immediately below the above-described power transmission loop coil TL22 with a film interposed therebetween is constituted of a copper thin film line TL231 and a copper thin film line TL232 wound in parallel with each other in the same layer of the power transmission coil TC2, and the outermost circumference end portions thereof are formed as a connection terminal M 1 and a connection terminal M2 for separately connecting the copper thin film line TL231 and the copper thin film line TL232 to the above-described copper thin film line TL211 and the copper thin film line TL212 and to the above-described copper thin film line TL221 and the copper thin film line TL222, respectively. At this time, the above-described connection terminal M 1 and connection terminal M2 are the same as the connection terminal M1 and the connection terminal M2 illustrated in Fig. 9, respectively. Meanwhile, the innermost circumference end portions of the copper thin film line TL231 and the copper thin film line TL232 are formed as the external connection terminal 02 for connecting the copper thin film line TL231 and the copper thin film line TL232 and for connecting to the power transmission unit TR. The external connection terminal 02 is configured to penetrate the film between the current adjustment coil TL23 and the power transmission loop coil TL22 and the film BF between the power transmission loop coil TL22 and the power transmission loop coil TL21 so as to be exposed on the same surface as the external connection terminal O1 illustrated in Fig. 9(a). Furthermore, the current adjustment coil TL23 is configured in such a manner that the copper thin film line TL231 and the copper thin film line TL232 are wound five times (five turns) in parallel counterclockwise from the connection terminal M 1 and the connection terminal M2 of the outermost circumference portion to the external connection terminal 02 of the innermost circumference portion in Fig. 10(a). As a result, the total electrical number of windings (five turns) of the power transmission loop coil TL21 and the power transmission loop coil TL22 is an integral multiple (one time) of the number of windings of the current adjustment coil TL23. Furthermore, in each of the copper thin film line TL231 and the copper thin film line TL232, a linear portion is provided in each of the upper side portion, the lower side portion, the left side portion, and the right side portion in Fig. 10(a), and the respective linear portions are connected by a curved portion having a substantially concentric arc shape. In addition, the winding center of the above-described copper thin film line TL211 and copper thin film line TL212, the winding center of the above-described copper thin film line TL221 and copper thin film line TL222, and the winding center of the above-described copper thin film line TL231 and copper thin film line TL232 coincide or substantially coincide with each other. Note that the width w21 of the above-described copper thin film line TL231 is the same as the width w21 of the copper thin film line TL211 of the power transmission loop coil TL21 illustrated in Fig. 9(a) and the width w21 of the copper thin film line TL221 of the power transmission loop coil TL22 illustrated in Fig. 9(b), and is formed wider toward the inner circumference side of the power transmission coil TC2. The width w21 is the same in each linear portion constituting the copper thin film line TL231, and said width w21 is changed (that is, the width is changed so as to be wider toward the inner circumference side of power transmission coil TC2) in each curved portion connecting said linear portions. On one hand, the thickness of the above-described copper thin film line TL231 is the same over the entire circumference of the current adjustment coil TL23. On the other hand, the width w22 of the above-described copper thin film line TL232 is the same as the width w22 of the copper thin film line TL212 illustrated in Fig. 9(a) and the width w22 of the copper thin film line TL222 illustrated in Fig. 9 (b), and is formed wider toward the inner circumference side of the power transmission coil TC2 in the same manner as the width w21 of the copper thin film line TL231. The width w23 is the same in each linear portion constituting the copper thin film line TL232, and said width w22 is changed (that is, the width is changed so as to be wider toward the inner circumference side of power transmission coil TC2) in each curved portion connecting said linear portions. Meanwhile, the thickness of the above-described copper thin film line TL232 is the same over the entire circumference of the current adjustment coil TL23. With the above configuration, the width w20 (same as the width w20 of the power transmission loop coil TL21 illustrated in Fig. 9(a) and the width w20 of the power transmission loop coil TL22 illustrated in Fig. 9(b). See Fig. 10(a).) of each winding as the current adjustment coil TL23 is also formed wider toward the inner circumference side of the power transmission coil TC2. Furthermore, in the current adjustment coil TL23, the width w22 of the copper thin film line TL232 on the inner circumference side in one winding is formed wider than the width w21 of the copper thin film line TL231 on the outer circumference side in the one winding over the entire circumference.

Next, a positional relationship among the above-described power transmission loop coil TL21 including the above-described copper thin film line TL211 and the above-described copper thin film line TL212 and the above-described power transmission loop coil TL22 including the above-described copper thin film line TL221 and the above-described copper thin film line TL222, and the above-described current adjustment coil TL23 including the above-described copper thin film line TL231 and the above-described copper thin film line TL232 will be described with reference to Fig. 10(b). Note that Fig. 10(b) is a plan view illustrating an overlapping state of the power transmission loop coil TL21, the power transmission loop coil TL22, and the current adjustment coil TL23, in which the power transmission loop coil TL21 is indicated by solid lines, the power transmission loop coil TL22 laminated immediately therebelow via the film BF (not illustrated in Fig. 10(b)) is indicated by broken lines, and the current adjustment coil TL23 laminated immediately below the power transmission loop coil TL22 via the film is indicated by one-dot chain lines.

As indicated by the solid lines in Fig. 10(b), in the power transmission loop coil TL21 including the copper thin film line TL211 and the copper thin film line TL212 wound in parallel, in only one curved portion (for example, the curved portion at the lower right corner portion in Fig. 10(b)) among the above-described four curved portions included in the one winding, the copper thin film line TL211 and the copper thin film line TL212 are wound counterclockwise from the external connection terminal O1 to the connection terminal M1 and the connection terminal M2 such that the position of the linear portion is shifted to the outer circumference side or the inner circumference side (that is, the winding transitions to the outer circumference side or the inner circumference side) by one pitch PT2 (see Fig. 10(b)) in the winding of each of the copper thin film line TL211 and the copper thin film line TL212. As a result, the curved portion where the winding of the power transmission loop coil TL21 transitions to the outer circumference side or the inner circumference side by one pitch PT2 is, for example, a group of four curved portions at the lower right corner portion in Fig. 10(b).

In contrast, in the power transmission loop coil TL22 including the copper thin film line TL221 and the copper thin film line TL222 respectively connected at the outermost circumference portions thereof to the copper thin film line TL211 and the copper thin film line TL212 constituting the transmission loop coil TL21 by the external connection terminal O1, the connection terminal M1, and the connection terminal M2, as shown by a broken line in Fig. 10(b), in only one curved portion (for example, the curved portion at the lower right corner portion in Fig. 10(b)) among the above-described four curved portions included in the one winding, the copper thin film line TL221 and the copper thin film line TL222 are wound counterclockwise (that is, in the same direction as the power transmission loop coil TL21) in such a manner that the positions of the linear portions are shifted to the outer circumference side or the inner circumference side (that is, in a manner such that the winding transitions to the outer circumference side or the inner circumference side) by one pitch PT2 in the winding of each of the copper thin film line TL221 and the copper thin film line TL222. As a result, the curved portion where the winding of the power transmission loop coil TL22 transitions to the outer circumference side or the inner circumference side by one pitch PT2 is, for example, a group of four curved portions at the lower right corner portion in Fig. 10(b). In addition, one end of each outermost periphery of the power transmission loop coil TL21 and the power transmission loop coil TL22 on the right side in Fig. 10(b) is connected to the external connection terminal O1 having a shape protruding outward, and the other end of each outermost periphery of the right side in Fig. 10(b) of the power transmission loop coil TL21 and the power transmission loop coil TL22 is respectively formed as the connection terminal M1 and the connection terminal M2.

Furthermore, in the current adjustment coil TL23 formed in such a manner that the copper thin film line TL231 and the copper thin film line TL232 respectively connected via the connection terminal M 1 and the connection terminal M2 to the copper thin film line TL211 and the copper thin film line TL212, and the copper thin film line TL221 and the copper thin film line TL222 are wound in parallel from the outer periphery toward the inner periphery, as shown by a one-dot chain line in Fig. 10(b), the copper thin film line TL231 and the copper thin film line TL232 are wound counterclockwise (that is, in the same direction as the power transmission loop coil TL21 and the power transmission loop coil TL22) such that the positions of the linear portions are shifted to the inner circumference side (that is, in such a manner that the winding transitions to the inner circumference side) by one pitch PT2 in the winding of each of the copper thin film line TL231 and the copper thin film line TL232 in only one curved portion (for example, the curved portion at the lower right corner portion in Fig. 10(b)) of the above-described four curved portions included in the one winding. As a result, the curved portion where the winding of the current adjustment coil TL23 transitions to the inner circumference side by one pitch PT2 is, for example, a group of four curved portions arranged from the outer circumference side to the inner circumference side at the lower right corner portion in Fig. 10(b). Then, the outermost circumference end portion of the current adjustment coil TL23 is formed as the connection terminal M1 and the connection terminal M2, and the innermost circumference end portion thereof is formed as the external connection terminal 02.

Since the power transmission loop coil TL21, the power transmission loop coil TL22, and the current adjustment coil TL23, each having the shape as described above, are laminated as illustrated in Fig. 10(b), each of the positions of the copper thin film line TL211, the copper thin film line TL221, and the copper thin film line TL231 when viewed from the center of the power transmission coil TC2 coincides except for the curved portion where each winding transitions and connection portions to the external connection terminal O1 and to the external connection terminal 02, and to the connection terminal M1 and the connection terminal M2. In the same manner, each of the positions of the copper thin film line TL212, the copper thin film line TL222, and the copper thin film line TL232, as viewed from the center of the power transmission coil TC2, coincides except for the curved portion where each winding transitions and connection portions to the external connection terminal O1 and the external connection terminal 02, and to the connection terminal M1 and the connection terminal M2. Therefore, as the power transmission coil TC2, the power transmission loop coil TL21 to the current adjustment coil TL23 are laminated with the film BF interposed therebetween in a state where at least each linear portion of the power transmission loop coil TL21, at least each linear portion of the power transmission loop coil TL22, and at least each linear portion of the current adjustment coil TL23 overlap each other. As a result, the copper thin film line TL211, the copper thin film line TL212, the copper thin film line TL221, and the copper thin film line TL222 are wound counterclockwise in the order from the outermost circumference portion of the power transmission loop coil TL21 and the outermost circumference portion (the external connection terminal O1) of the power transmission loop coil TL22 to the innermost circumference portions thereof to the connection terminal M1 and the connection terminal M2 of the outermost circumference portions thereof. Then, the copper thin film line TL231 and the copper thin film line TL232 of the current adjustment coil TL23 are wound counterclockwise from the connection terminal M1 and the connection terminal M2 to the innermost circumference portion thereof, and said innermost circumference end portion is connected to the external connection terminal 02. With this structure, as the power transmission coil TC2 of the second embodiment, a current flows counterclockwise from the external connection terminal O1 to the connection terminal M1 and the connection terminal M2 in the power transmission loop coil TL21 and the power transmission loop coil TL22, and then flows counterclockwise from the connection terminal M1 and the connection terminal M2 to the external connection terminal 02 in the current adjustment coil TL23.

Note that the method of manufacturing the power transmission coil TC2 and a power reception coil RC2 of the second embodiment is basically the same as the above-described method of manufacturing the power transmission coil TC1 and the power reception coil RC1 of the first embodiment, and thus detailed description is omitted.

### Second example

Next, results (simulation results) of measuring impedance and the like in a case where the configuration of the power transmission coil or the power reception coil is changed in the power transmission system using the power transmission coil TC2 or the power reception coil RC2 of the second embodiment having the configuration illustrated in Figs. 9 and 10 will be described as a second example using Table 1 below. Note that Table 1 lists impedance and the like as an effect of the structure of the power transmission coil TC2 or the power reception coil RC2 of the second embodiment, and also lists impedance and the like as an effect of the structure of a power transmission coil or a power reception coil of a third embodiment to be described later.

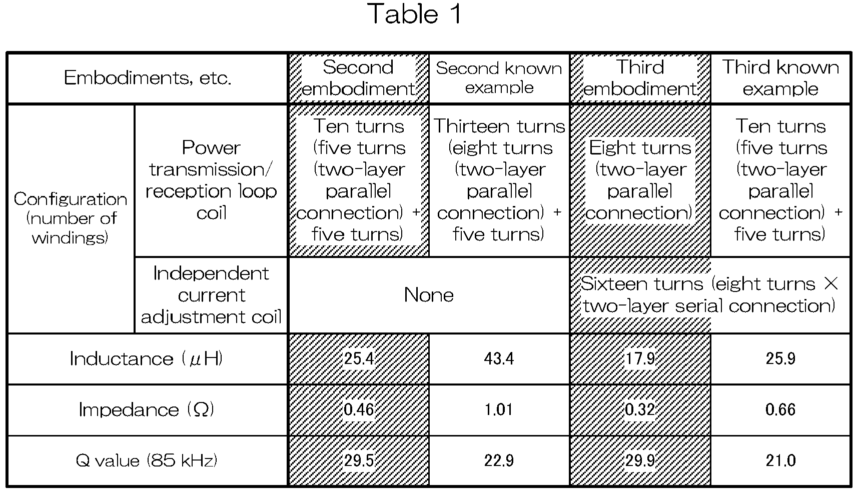

Here, as illustrated in Table 1, in a second known example to be compared with the above-described second example, the number of windings of the power transmission loop coil TL21 and the power transmission loop coil TL22 in the power transmission coil TC2 or the power reception coil RC2 of the second embodiment is eight, and other structures such as the number of windings of the current adjustment coil TL23 are the same as those of the power transmission coil TC2 or the power reception coil RC2 of the second embodiment. As a result, in the power transmission coil and the power reception coil of the second known example, the number of windings (eight turns) of each power transmission loop coil included in the coils is not an integral multiple of the number of windings (five turns) of a current adjustment coil RL23, and thus the positions of the power transmission loop coil and the like and the copper thin film lines constituting current adjustment coil RL23 do not overlap each other when viewed from the center.

In addition, the other specifications of each of the power transmission coil TC2 of the second embodiment and the power transmission coil of the second known example used in the experiment of the second example are as follows. Note that in the following description, the specifications of the power transmission coil TC2 and the power transmission coil of the second known example will be described, but the specifications of the power reception coil RC2 of the second embodiment used in the experiment are the same as the specifications of the power transmission coil TC2, and the specifications of the power reception coil of the second known example are the same as the specifications of the power transmission coil of the second known example.
- Sizes of the power transmission coil TC2 (power reception coil RC2) and the power transmission coil and the power reception coil of the second known example: long side 266 mm × short side 160 mm
- Pitch PT2 (see Fig. 10(b)): 5.5 mm (outermost circumference portion) to 9.5 mm (innermost circumference portion)
- Thickness of the copper thin film line in the copper thin film line TL211 and the like: 0.2 mm
- Distance between the power transmission coil and the power reception coil: 40 mm
- A ferrite sheet having the same thickness as each of the power transmission coil and the power reception coil is provided on a surface opposite to a facing surface of each of the power transmission coil and the power reception coil.

As indicated by hatching in Table 1, at the frequency (85 kilohertz) used for power transmission by the power transmission system of the second embodiment, it can be seen that the case of using the power transmission coil TC2 and the power reception coil RC2 of the second embodiment has better performance in impedance and Q value than the case of using the power transmission coil and the power reception coil of the second known example. That is, it can be said that the configurations of the above-described power transmission coil TC2 and the above-described power reception coil RC2 (the configurations in which the copper thin film lines constituting each coil overlap each other) are more preferable in terms of reduction of the impedance and the inductance and improvement of the Q value.

As described above, according to the power transmission using the power transmission system of the second embodiment including the power transmission coil TC2 and the power reception coil RC2 of the second embodiment, in addition to the effects achieved by the power transmission using the power transmission system S of the first embodiment, the width w21 and the width w22 of each of the copper thin film line TL211 and the copper thin film line TL212, the copper thin film line TL221 and the copper thin film line TL222, and the copper thin film line TL231 and the copper thin film line TL232 are formed wider as the winding is closer to the center of the power transmission coil TC2 or the like, so that the width of the copper thin film line is formed wider as it is closer to the center of the power transmission coil TC2 or the like where the current concentrates, whereby the impedance of the power transmission coil TC2 or the like can be further reduced.

### (C) Third embodiment

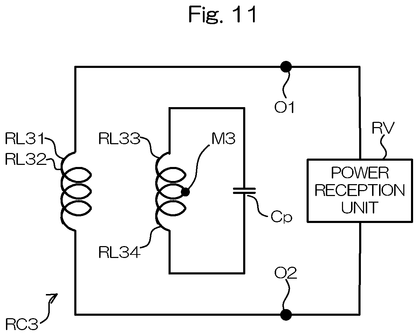

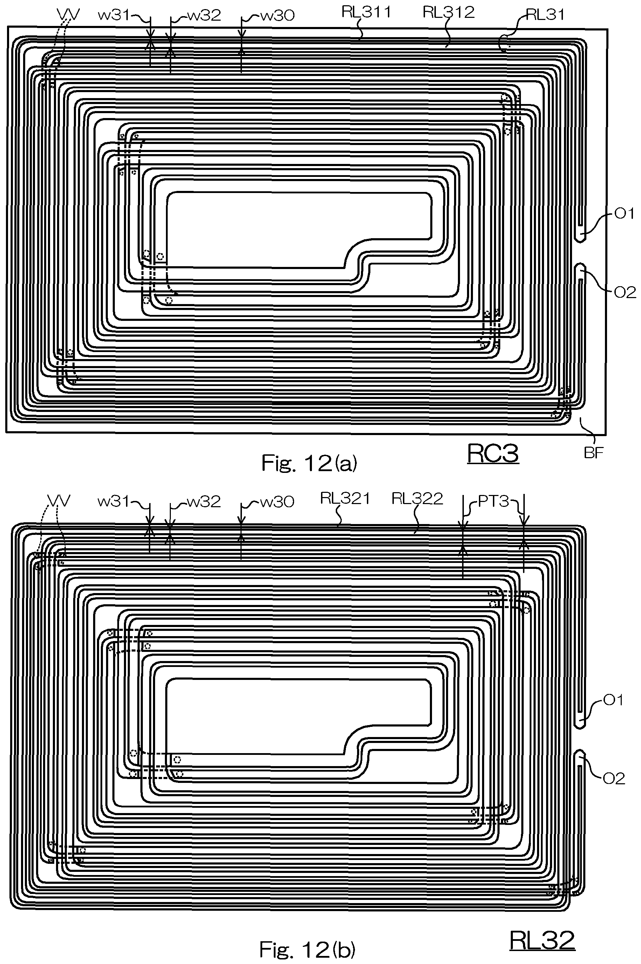

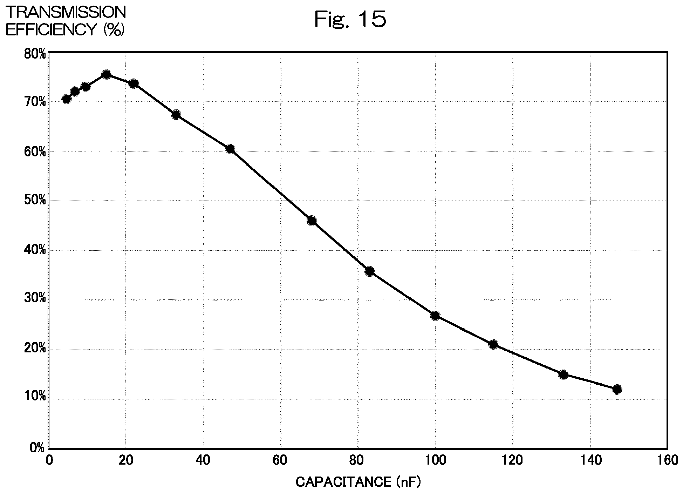

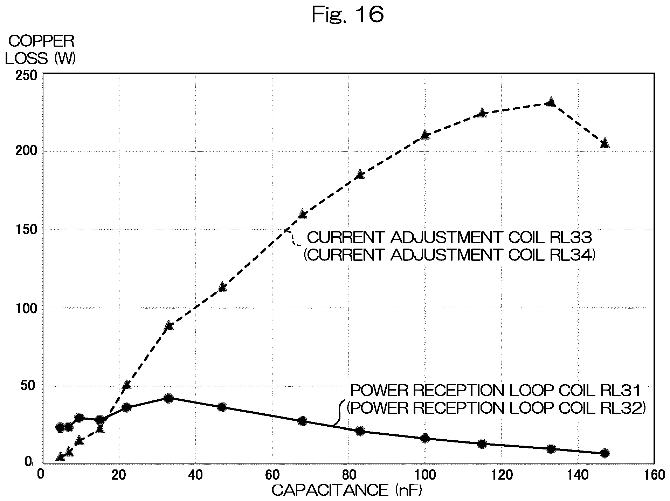

Next, a third embodiment of the present invention will be described with reference to Figs. 11 to 16. Note that Fig. 11 is a circuit figure illustrating a schematic configuration of a power reception coil included in a power transmission system of the third embodiment, Figs. 12 to 14 are plan views illustrating a structure of the coil of the third embodiment, Fig. 15 is a figure illustrating a relationship between capacitance and transmission efficiency as an effect of the configuration of the power reception coil of the third embodiment, and Fig. 16 is a figure illustrating a relationship between capacitance and loss (copper loss) as an effect of the structure of the power reception coil of the third embodiment.

In the power transmission coil TC1 (power reception coil RC1) of the first embodiment described above, the case has been described where the power transmission coil TC1 is configured of the two power transmission loop coils TL11 and TL12 (see Figs. 2 to 4). In contrast, the power reception coil of the third embodiment described below is configured by laminating a first power reception loop coil having a configuration same as that of the above-described power transmission loop coil TL21 of the second embodiment, a second power reception loop coil having a configuration same as that of the above-described power transmission loop coil TL22 of the second embodiment, and a coil for current adjustment (hereinafter, referred to as a "current adjustment coil") independent of said first power reception loop coil and second power reception loop coil.

Note that in the following description, the power reception coil of the third embodiment will be mainly described, but the power reception coil of the third embodiment and the power transmission coil of the third embodiment may have the same configuration. In addition, in the following description, the same constituent members as those of the power reception coil RC1 (that is, the power transmission coil TC1) of the first embodiment are denoted by the same member numbers, and detailed description thereof is omitted.

First, a circuit configuration of the power reception coil of the third embodiment will be described with reference to Fig. 11. As illustrated in Fig. 11, a power reception coil RC3 of the third embodiment is configured by including an external connection terminal O1 and an external connection terminal 02, two power reception loop coils RL31 and RL32, two current adjustment coils RL33 and RL34, and a capacitor Cp for current adjustment. Note that in the following description, the above-described capacitor for current adjustment is simply referred to as a "current adjustment capacitor". In addition, the current adjustment capacitor Cp corresponds to an example of the "capacitance means" of the present invention. In the above configuration, each of the external connection terminal O1 and the external connection terminal 02 is an external connection terminal for connecting the power reception coil RC3 to the power reception unit RV. In addition, the power reception loop coil RL31 and the power reception loop coil RL32 are connected in series to the external connection terminal O1 and the external connection terminal 02, and are connected in parallel to each other. Furthermore, the current adjustment coil RL33 and the current adjustment coil RL34 are insulated from the power reception loop coil RL31 and the power reception loop coil RL32, and are connected to each other in series by a connection terminal M3. The current adjustment capacitor Cp is connected to both end portions of the current adjustment coil RL33 and the current adjustment coil RL34. Note that the current adjustment capacitor and the two current adjustment coils having configurations same as those of the current adjustment capacitor Cp and the current adjustment coil RL33 and the current adjustment coil RL34 may be provided in the power transmission coil of the third embodiment constituting the power transmission system of the third embodiment together with the power reception coil RC3. At this time, the current adjustment capacitor Cp, the current adjustment coil RL33, and the current adjustment coil RL34 mainly contribute to reduction of impedance and improvement of transmission efficiency.

Next, a specific configuration of the power reception coil RC3 of the third embodiment will be described with reference to Figs. 12 to 14. At this time, the power reception loop coil RL31 (corresponding to the above-described first power reception loop coil) of the third embodiment to be described below has basically the same configuration as the power transmission loop coil TL21 of the second embodiment except for the number of windings. In the same manner, the power reception loop coil RL32 (corresponding to the above-described second power reception loop coil) of the third embodiment has basically the same configuration as the power transmission loop coil TL22 of the second embodiment except for the number of windings.

That is, as illustrated in the plan view of Fig. 12(a), the power reception coil RC3 of the third embodiment is configured by laminating a power reception loop coil RL31 configured by two parallel copper thin film lines RL311 and RL312 and the power reception loop coil RL32 illustrated in the plan view of Fig. 12(b) in a direction perpendicular to the paper surface of Fig. 12 via an insulating film BF. In addition, the winding center of the copper thin film line RL311 and the copper thin film line RL312 and the winding center of the copper thin film line RL321 and the copper thin film line RL322 (see Fig. 12(b)) coincide or substantially coincide with each other.

As illustrated in Fig. 12(a), the power reception loop coil RL31 constituted of the copper thin film line RL311 and the copper thin film line RL312 wound in parallel with each other in the same layer (the front surface of the film BF illustrated in Fig. 12(a)) of the power reception coil RC3, and has, at one side of the outermost circumference portion thereof (the center of the right side portion in the case illustrated in Fig. 12(a)), the external connection terminal O1 and the external connection terminal 02 for connecting the copper thin film line RL311 and the copper thin film line RL312 and for connecting to the power transmission unit TR. Furthermore, the power reception loop coil RL31 is configured in such a manner that the copper thin film line RL311 and the copper thin film line RL312 are wound four times (four turns) in parallel counterclockwise from the external connection terminal O1 of the outermost circumference portion to the innermost circumference portion thereof in Fig. 12(a), and are further wound four times (four turns) in parallel counterclockwise from said innermost circumference portion to the external connection terminal 02 in the same manner. In addition, the intersection portions of the winding of the copper thin film line RL311 and the copper thin film line RL312 intersect at seven points (see Fig. 12(a)) while being insulated from each other by a laminated structure in which the insulating layer is sandwiched and each of said copper thin film line RL311 and copper thin film line RL312 is conducted through the via W, a method using a jumper wire, or the like. Furthermore, in each of the copper thin film line RL311 and the copper thin film line RL312, a linear portion is provided in each of the upper side portion, the lower side portion, the left side portion, and the right side portion in Fig. 12(a), and the respective linear portions are connected by a curved portion having a substantially concentric arc shape. In addition, a width w31 of the above-described copper thin film line RL311 is formed wider toward the inner circumference side of the power reception coil RC3. The width w31 is the same in each linear portion constituting the copper thin film line RL311, and the width w31 is changed (that is, the width is changed so as to be wider toward the inner circumference side of the power reception coil RC3) in each curved portion connecting said linear portions. On one hand, the thickness of the above-described copper thin film line RL311 is the same over the entire circumference of the power reception loop coil RL31. On the other hand, a width w32 of the above-described copper thin film line RL312 is also formed wider toward the inner circumference side of the power reception coil RC3 in the same manner as the width w31. The width w32 is the same in each linear portion constituting the copper thin film line RL312, and said width w32 is changed (that is, the width is changed so as to be wider toward the inner circumference side of the power reception coil RC3) in each curved portion connecting the linear portions. Meanwhile, the thickness of the above-described copper thin film line RL312 is the same over the entire circumference of the power reception loop coil RL31. With the above configuration, a width w30 (see Fig. 12(a)) of each winding as the power reception loop coil RL31 is also formed wider toward the inner circumference side of the power reception coil RC3. Furthermore, in the power reception loop coil RL31, the width w32 of the copper thin film line RL312 on the inner circumference side in one winding is formed wider than the width w31 of the copper thin film line RL311 on the outer circumference side in the one winding over the entire circumference.

Next, a configuration of the power reception loop coil RL32 laminated immediately below the above-described power reception loop coil RL31 via the above-described film BF will be described with reference to Fig. 12(b). Note that Fig. 12(b) is a plan view illustrating only said power reception loop coil RL32 taken out. The overall shape of the power reception loop coil RL32 is formed as a substantially rectangular shape, which is the same as the overall shape of the power reception loop coil RL31.

As illustrated in the plan view of Fig. 12(b), the power reception loop coil RL32 laminated on the above-described power reception loop coil RL31 with the film BF interposed therebetween is constituted of the copper thin film line RL321 and the copper thin film line RL322 wound in parallel with each other in the same layer (the back surface of the film BF illustrated in Fig. 12(a)) of the power reception coil RC3, and has, at one side of the outermost circumference portion thereof (the center of the right side portion in the case illustrated in Fig. 12(b)), the external connection terminal O1 and the external connection terminal 02 for connecting the copper thin film line RL321 and the copper thin film line RL322 and for connecting to the power transmission unit TR in parallel with the power reception loop coil RL31. At this time, the above-described external connection terminal O1 and the above-described external connection terminal 02 are the same as the external connection terminal O1 and the external connection terminal 02 illustrated in Fig. 12(a). Furthermore, the power reception loop coil RL32 is configured in such a manner that the copper thin film line RL321 and the copper thin film line RL322 are wound four times (four turns) in parallel counterclockwise from the external connection terminal O1 of the outermost circumference portion to the innermost circumference portion thereof in Fig. 12(b), and are further wound four times (four turns) in parallel counterclockwise from said innermost circumference portion to the external connection terminal 02 in the same manner. In addition, the intersection portions in the winding of the copper thin film line RL321 and the copper thin film line RL322 intersect at seven points (see Fig. 12(b)) while being insulated from each other by a laminated structure in which the insulating layer is sandwiched and each of said copper thin film line RL321 and copper thin film line RL322 is conducted through the via W, a method using a jumper wire, or the like. Furthermore, in each of the copper thin film line RL321 and the copper thin film line RL322, a linear portion is provided in each of the upper side portion, the lower side portion, the left side portion, and the right side portion in Fig. 12(b), and the respective linear portions are connected by a curved portion having a substantially concentric arc shape. Note that the width w31 of the above-described copper thin film line RL321 is the same as the width w31 of the above-described copper thin film line RL311, and is formed wider toward the inner circumference side of the power reception coil RC3. The width w31 is the same in each linear portion constituting the copper thin film line RL321, and said width w31 is changed (that is, the width is changed so as to be wider toward the inner circumference side of the power reception coil RC3) in each curved portion connecting said linear portions. On one hand, the thickness of the above-described copper thin film line RL321 is the same over the entire circumference of the power reception loop coil RL32. On the other hand, the width w32 of the above-described copper thin film line RL322 is the same as the width w32 of the above-described copper thin film line RL312, and is formed wider toward the inner circumference side of the power reception coil RC3 in the same manner as the width w31. The width w32 is the same in each linear portion constituting the copper thin film line RL322, and said width w32 is changed (that is, the width is changed so as to be wider toward the inner circumference side of the power reception coil RC3) in each curved portion connecting said linear portions. Meanwhile, the thickness of the above-described copper thin film line RL322 is the same over the entire circumference of the power reception loop coil RL32. With the above configuration, the width w30 (see Fig. 12(b)) of each winding as the power reception loop coil RL32 is also formed wider toward the inner circumference side of the power reception coil RC3. Furthermore, in the power reception loop coil RL32, the width w32 of the copper thin film line RL322 on the inner circumference side in one winding is formed wider than the width w31 of the copper thin film line RL321 on the outer circumference side in the one winding over the entire circumference.

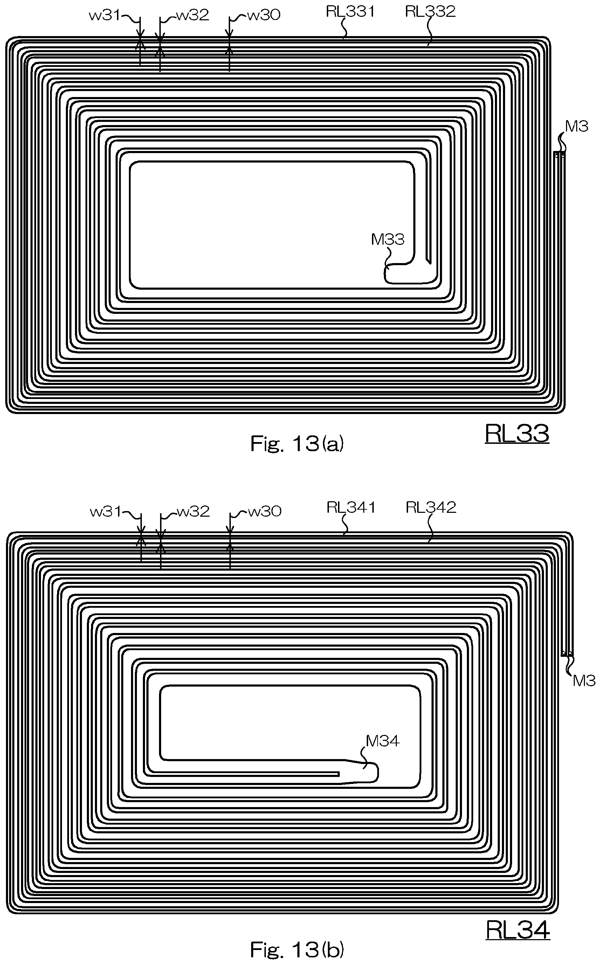

Next, in the power reception coil RC3 of the third embodiment, a configuration of the current adjustment coil RL33 further laminated immediately below the above-described power reception loop coil RL32 via a film not illustrated (formed of the same material and the like as the above-described film BF) will be described with reference to Fig. 13(a). Note that Fig. 13(a) is a plan view illustrating only said current adjustment coil RL33 taken out. The overall shape of the current adjustment coil RL33 and the current adjustment coil RL34 each is a substantially rectangular shape, which is the same as the overall shape of each of the power reception loop coil RL31 and the power reception loop coil RL32.

As illustrated in the plan view of Fig. 13(a), the current adjustment coil RL33 laminated immediately below the above-described power reception loop coil RL32 with a film interposed therebetween is constituted of a copper thin film line RL331 and a copper thin film line RL332 wound in parallel with each other in the same layer of the power reception coil RC3, and the outermost circumference end portion thereof is formed as the connection terminal M3 for separately connecting the copper thin film line RL331 and the copper thin film line RL332 in series to a copper thin film line RL341 and a copper thin film line RL342 of the current adjustment coil RL34 to be described with reference to Fig. 13 (b). At this time, the above-described copper thin film lines RL331 to RL342 each correspond to an example of the "adjustment winding line" of the present invention. Meanwhile, the innermost circumference end portions of the copper thin film line RL331 and the copper thin film line RL332 are formed as a connection terminal M33 for connecting the copper thin film line RL331 and the copper thin film line RL332 and for connecting the above-described current adjustment capacitor Cp. Furthermore, the current adjustment coil RL33 is configured in such a manner that the copper thin film line RL331 and the copper thin film line RL332 are wound eight times (eight turns) in parallel clockwise from the connection terminal M3 of the outermost circumference portions thereof to the connection terminal M33 of the innermost circumference portions thereof in Fig. 13(a). Furthermore, in each of the copper thin film line RL331 and the copper thin film line RL332, a linear portion is provided in each of the upper side portion, the lower side portion, the left side portion, and the right side portion in Fig. 13(a), and the respective linear portions are connected by a curved portion having a substantially concentric arc shape. In addition, the winding center of the above-described copper thin film line RL311 and copper thin film line RL312, the winding center of the above-described copper thin film line RL321 and copper thin film line RL322, and the winding center of the above-described copper thin film line RL331 and copper thin film line RL332 coincide or substantially coincide with each other. Note that the width w31 of the above-described copper thin film line RL331 is the same as the width w31 of the above-described copper thin film line RL311 and as the width w31 of the above-described copper thin film line RL321, and is formed wider toward the inner circumference side of the power reception coil RC3. The width w31 is the same in each linear portion constituting the copper thin film line RL331, and said width w31 is changed (that is, the width is changed so as to be wider toward the inner circumference side of the power reception coil RC3) in each curved portion connecting said linear portions. On one hand, the thickness of the above-described copper thin film line RL331 is the same over the entire circumference of the current adjustment coil RL33. On the other hand, the width w32 of the above-described copper thin film line RL332 is the same as the width w32 of the copper thin film line RL312 of the power reception loop coil RL31 illustrated in Fig. 12(a) and as the width w32 of the copper thin film line RL322 of the power reception loop coil RL32 illustrated in Fig. 12(b), and is formed wider toward the inner circumference side of the power reception coil RC3 in the same manner as the width w31 of the copper thin film line RL331. The width w32 is the same in each linear portion constituting the copper thin film line RL332, and said width w32 is changed (that is, the width is changed so as to be wider toward the inner circumference side of the power reception coil RC3) in each curved portion connecting said linear portions. Meanwhile, the thickness of the above-described copper thin film line RL332 is the same over the entire circumference of the current adjustment coil RL33. With the above configuration, the width w30 (same as the width w30 of the power reception loop coil RL31 illustrated in Fig. 12(a) and the width w30 of the power reception loop coil RL32 illustrated in Fig. 12(b). See Fig. 13(a).) of each winding as the current adjustment coil RL33 is also formed wider toward the inner circumference side of the power reception coil RC3. Furthermore, in the current adjustment coil RL33, the width w32 of the copper thin film line RL332 on the inner circumference side in one winding is formed wider than the width w31 of the copper thin film line RL331 on the outer circumference side in the one winding over the entire circumference.

Next, in the power reception coil RC3 of the third embodiment, a configuration of the current adjustment coil RL34 further laminated immediately below the above-described current adjustment coil RL33 via a film not illustrated (formed of the same material and the like as the above-described film BF) will be described with reference to Fig. 13(b). Note that Fig. 13(b) is a plan view illustrating only said current adjustment coil RL34 taken out.

As illustrated in the plan view of Fig. 13(b), the current adjustment coil RL34 laminated immediately below the above-described current adjustment coil RL33 with a film interposed therebetween is constituted of the copper thin film line RL341 and the copper thin film line RL342 wound in parallel with each other in the same layer of the power reception coil RC3, and the outermost circumference end portion thereof is formed as the above-described connection terminal M3 for separately connecting the copper thin film line RL341 and the copper thin film line RL342 in series to the copper thin film line RL331 and the copper thin film line RL332 of the above-described current adjustment coil RL33. At this time, said connection terminal M3 is the same as the connection terminal M3 illustrated in Fig. 13 (a). Meanwhile, the innermost circumference end portions of the copper thin film line RL341 and the copper thin film line RL342 are formed as a connection terminal M34 for connecting the copper thin film line RL341 and the copper thin film line RL342 and for connecting the above-described current adjustment capacitor Cp. Furthermore, the current adjustment coil RL34 is configured in such a manner that the copper thin film line RL341 and the copper thin film line RL342 are wound eight times (eight turns) in parallel clockwise from the connection terminal M34 of the outermost circumference portions thereof to the connection terminal M3 of the innermost circumference portions thereof in Fig. 13(b). Furthermore, in each of the copper thin film line RL341 and the copper thin film line RL342, a linear portion is provided in each of the upper side portion, the lower side portion, the left side portion, and the right side portion in Fig. 13(b), and each of the linear portions is connected by a curved portion having a substantially concentric arc shape. In addition, the winding center of the above-described copper thin film line RL311 and copper thin film line RL312, the winding center of the above-described copper thin film line RL321 and copper thin film line RL322, the winding center of the above-described copper thin film line RL331 and copper thin film line RL332, and the winding center of the above-described copper thin film line RL341 and copper thin film line RL342 coincide or substantially coincide with each other. Note that the width w31 of the above-described copper thin film line RL341 is the same as the width w31 of the above-described copper thin film line RL311, as the width w31 of the above-described copper thin film line RL321, and as the width w31 of the above-described copper thin film line RL331, and is formed wider toward the inner circumference side of the power reception coil RC3. The width w31 is the same in each linear portion constituting the copper thin film line RL341, and the width w31 is changed (that is, the width is changed so as to be wider toward the inner circumference side of the power reception coil RC3) in each curved portion connecting said linear portions. On one hand, the thickness of the above-described copper thin film line RL341 is the same over the entire circumference of the current adjustment coil RL34. On the other hand, the width w32 of the above-described copper thin film line RL342 is the same as the width w32 of the above-described copper thin film line RL312, as the width w32 of the above-described copper thin film line RL322, and as the width w32 of the above-described copper thin film line RL332, and is formed wider toward the inner circumference side of the power reception coil RC3 in the same manner as the width w31 of the copper thin film line RL341. The width w32 is the same in each linear portion constituting the copper thin film line RL342, and the width w32 is changed (that is, the width is changed so as to be wider toward the inner circumference side of the power reception coil RC3) in each curved portion connecting said linear portions. Meanwhile, the thickness of the above-described copper thin film line RL342 is the same over the entire circumference of the current adjustment coil RL34. With the above configuration, the width w30 (same as the width w30 of the power reception loop coil RL31 illustrated in Fig. 12(a), the width w30 of the power reception loop coil RL32 illustrated in Fig. 12(b), and the width w30 of the current adjustment coil RL33 illustrated in Fig. 13(a). See Fig. 13(b).) of each winding as the current adjustment coil RL34 is also formed wider toward the inner circumference side of the power reception coil RC3. Furthermore, in the current adjustment coil RL34, the width w32 of the copper thin film line RL342 on the inner circumference side in one winding is formed wider than the width w31 of the copper thin film line RL341 on the outer circumference side in the one winding over the entire circumference.

With the configuration of each of the current adjustment coil RL33 and the current adjustment coil RL34, and the power reception loop coil RL31 and the power reception loop coil RL32 as described above, the number of windings (sixteen turns) obtained by combining the current adjustment coil TL33 and the current adjustment coil RL34 connected in series is an integral multiple (two times) of the (electrical) number of windings (eight turns) obtained by combining a power reception loop coil TL31 and a power reception loop coil TL32 connected in parallel.

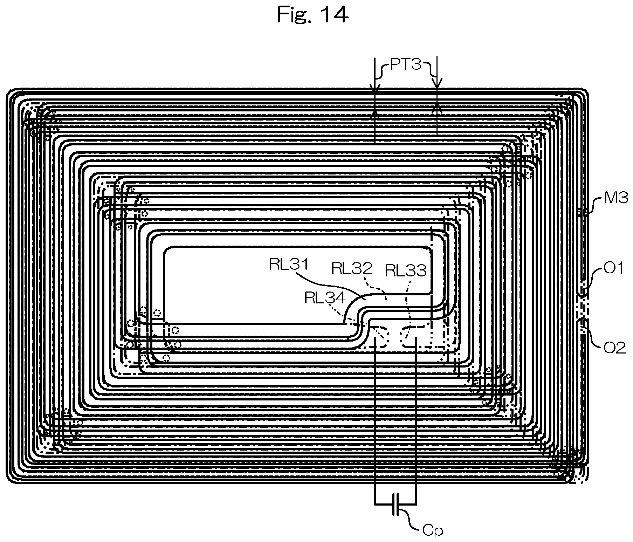

Next, a positional relationship among the above-described power reception loop coil RL31 including the above-described copper thin film line RL311 and the above-described copper thin film line RL312, the above-described power reception loop coil RL32 including the above-described copper thin film line RL321 and the above-described copper thin film line RL322, the above-described current adjustment coil RL33 including the above-described copper thin film line RL331 and the above-described copper thin film line RL332, and the above-described current adjustment coil RL34 including the above-described copper thin film line RL341 and the above-described copper thin film line RL342 will be described with reference to Fig. 14. Note that Fig. 14 is a plan view illustrating an overlapping state of the power reception loop coil RL31, the power reception loop coil RL32, the current adjustment coil RL33, and the current adjustment coil RL34. The power reception loop coil RL31 is indicated by solid lines, the power reception loop coil RL32 laminated immediately below the power reception loop coil RL31 via a film BF (not illustrated in Fig. 14) is indicated by broken lines, the current adjustment coil RL33 laminated immediately below the power reception loop coil RL32 via a film is indicated by one-dot chain lines, and the current adjustment coil RL34 laminated immediately below the current adjustment coil RL33 via a film is indicated by two-dot chain lines.

As indicated by the solid lines in Fig. 14, in the power reception loop coil RL31 including the copper thin film line RL311 and the copper thin film line RL312 wound in parallel, in only one curved portion (for example, the curved portion at the lower right corner portion in Fig. 14) among the above-described four curved portions included in one winding, the copper thin film line RL311 and the copper thin film line RL312 are wound counterclockwise from the external connection terminal O1 to the external connection terminal 02 such that the position of the linear portion is shifted to the outer circumference side or the inner circumference side (that is, in such a manner that the winding transitions to the outer circumference side or the inner circumference side) by one pitch PT3 (see Fig. 12(b) and Fig. 14) in the winding of each of the copper thin film line RL311 and the copper thin film line RL312. As a result, the curved portion where the winding of the power reception loop coil RL31 transitions to the outer circumference side or the inner circumference side by one pitch PT3 is included in, for example, a group of seven curved portions at the lower right corner portion in Fig. 14.

In contrast, in the power reception loop coil RL32 including the copper thin film line RL321 and the copper thin film line RL322 respectively connected at the outermost circumference portions thereof to the copper thin film line RL311 and the copper thin film line RL312 constituting the power reception loop coil RL31 by the external connection terminal O1 and the external connection terminal 02, as shown by a broken line in Fig. 14, in only one curved portion (for example, the curved portion at the lower right corner portion in Fig. 14) among the above-described four curved portions included in the one winding, the copper thin film line RL321 and the copper thin film line RL322 are wound counterclockwise (that is, in the same direction as the power reception loop coil RL31) in such a manner that the positions of the linear portions are shifted to the outer circumference side or the inner circumference side (that is, in such a manner that the winding transitions to the outer circumference side or the inner circumference side) by one pitch PT3 in the winding of each of the copper thin film line RL321 and the copper thin film line RL322. As a result, the curved portion where the winding of the power reception loop coil RL32 transitions to the outer circumference side or the inner circumference side by one pitch PT3 is included in, for example, a group of four curved portions at the lower right corner portion in Fig. 14. Then, each end portion of the outermost periphery of the power reception loop coil RL31 and the power reception loop coil RL32 on the right side in Fig. 14 is connected to the external connection terminal O1 and the external connection terminal 02, respectively.

Furthermore, in the current adjustment coil RL33 formed by winding the copper thin film line RL331 and the copper thin film line RL332 in parallel from the outer periphery to the inner periphery, as shown by a one-dot chain line in Fig. 14, in only one curved portion (for example, the curved portion at the lower right corner portion in Fig. 14) among the above-described four curved portions included in one winding, the copper thin film line RL331 and the copper thin film line RL332 are wound clockwise such that the position of the linear portion is shifted to the inner circumference side (that is, in such a manner that the winding transitions to the inner circumference side) by one pitch PT3 in the winding of each of the copper thin film line RL331 and the copper thin film line RL332. As a result, the curved portion where the winding of the current adjustment coil RL33 transitions to the inner circumference side by one pitch PT3 is, for example, a group of seven curved portions arranged from the outer circumference side to the inner circumference side at the lower right corner portion in Fig. 14. Then, the outermost circumference end portion of the current adjustment coil RL33 is formed as the connection terminal M3, and the innermost circumference end portion thereof is formed as the connection terminal M33.

Finally, in the current adjustment coil RL34 formed by winding the copper thin film line RL341 and the copper thin film line RL342 in parallel from the inner periphery to the outer periphery, as shown by a two-dot chain line in Fig. 14, in only one curved portion (for example, the curved portion at the lower right corner portion in Fig. 14) among the above-described four curved portions included in one winding, the copper thin film line RL341 and the copper thin film line RL342 are wound clockwise such that the position of the linear portion is shifted to the outer circumference side (that is, in such a manner that the winding transitions to the outer circumference side) by one pitch PT3 in the winding of each of the copper thin film line RL341 and the copper thin film line RL342. As a result, the curved portion where the winding of the current adjustment coil RL34 transitions to the outer circumference side by one pitch PT3 is, for example, a group of seven curved portions arranged from the outer circumference side to the inner circumference side at the lower right corner portion in Fig. 14. Then, the innermost circumference end portion of the current adjustment coil RL34 is formed as the connection terminal M34, and the outermost circumference end portion thereof is formed as the connection terminal M3.

Since the power reception loop coil RL31, the power reception loop coil RL32, the current adjustment coil RL33, and the current adjustment coil RL34, each having the shape as described above, are laminated as illustrated in Fig. 14, each of the positions of the copper thin film line RL311, the copper thin film line RL321, copper thin film line RL331, and the copper thin film line RL341 when viewed from the center of the power reception coil RC3 coincides except for the curved portion where each winding transitions and connection portions to the external connection terminal O1 and the external connection terminal 02, and to the connection terminal M3, the connection terminal M33, and the connection terminal M34. In the same manner, each of the positions of the copper thin film line RL312, the copper thin film line RL322, the copper thin film line RL332, and the copper thin film line RL342 as viewed from the center of the power reception coil RC3 also coincides except for the curved portion where each winding transitions and connection portions to the external connection terminal O1 and the external connection terminal 02, and to the connection terminal M3, the connection terminal M33, and the connection terminal M34. Therefore, as the power reception coil RC3, the power reception loop coil RL31 to the current adjustment coil RL34 are laminated with the film BF or the like interposed therebetween in a state where at least each linear portion of the power reception loop coil RL31, at least each linear portion of the power reception loop coil RL32, at least each linear portion of the current adjustment coil RL33, and at least each linear portion of the current adjustment coil RL34 overlap each other. As a result, the copper thin film line RL311, the copper thin film line RL312, the copper thin film line RL321, and the copper thin film line RL322 are wound counterclockwise in the order from the outermost circumference portion of the power reception loop coil RL31 and the outermost circumference portion (the external connection terminal O1) of the power reception loop coil RL32 to the innermost circumference portions thereof to the external connection terminal 02 of the outermost circumference portions thereof. Then, the copper thin film line RL341 and the copper thin film line RL342 of the current adjustment coil RL34 are wound clockwise from the connection terminal M34 to the connection terminal M3 at the outermost circumference portions thereof, and further, the copper thin film line RL331 and the copper thin film line RL332 of the current adjustment coil RL33 are wound clockwise from said connection terminal M3 to the connection terminal M33 at the innermost circumference portions thereof, and the current adjustment capacitor Cp is connected to the connection terminal M33 and the connection terminal M34. Note that the optimum value of the capacitance of the current adjustment capacitor Cp will be described later as a third example. With the above structure, as the power reception coil RC3 of the third embodiment, a current flows between the external connection terminal O1 and the external connection terminal 02 in the power reception loop coil RL31 and the power reception loop coil RL32, and the current value is adjusted by the current adjustment coil RL33, the current adjustment coil RL34, and the current adjustment capacitor Cp.

Note that the method of manufacturing the power transmission coil and the power reception coil RC3 of the third embodiment is basically the same as the above-described method of manufacturing the power transmission coil TC1 and the power reception coil RC1 of the first embodiment, and thus detailed description is omitted.

### Third example

Next, results (simulation results) of measuring impedance and the like in a case where the configuration of the power reception coil is changed in the power transmission system using the power reception coil RC3 of the third embodiment having the configuration illustrated in Figs. 12 to 14 will be described as a third example using the above-described Table 1. In addition, experimental results (simulation results) for optimizing the capacitance of the current adjustment capacitor Cp in the power transmission system using said power reception coil RC3 will also be described as the third example with reference to Figs. 15 and 16. Note that in Fig. 15, the horizontal axis represents the capacitance of the current adjustment capacitor Cp, and the vertical axis represents the transmission efficiency as the power reception coil RC3. Further in Fig. 16, the horizontal axis represents the capacitance of the current adjustment capacitor Cp, and the vertical axis represents the loss (copper loss) in each of the current adjustment coil RL33 (current adjustment coil RL34) and the power reception loop coil RL31 (power reception loop coil RL32).

Here, in a third known example, which is a comparison target with the above-described third example, as illustrated in Table 1, the portion of the power reception coil RC3 of the third embodiment other than the current adjustment coil RL33 and the current adjustment coil RL34 has the same configuration as that of the power reception coil RC2 (power transmission coil TC2) of the second embodiment. As a result, in the power reception coil of the third known example, the total number of windings (sixteen turns) of the current adjustment coil RL33 and the current adjustment coil RL34 connected in series is not an integral multiple of the number of windings (ten turns) of the power transmission loop coil, the power reception loop coil, and the like connected in parallel, and thus the positions of the copper thin film lines constituting the power reception loop coil and the like and the current adjustment coil do not overlap each other when viewed from the center thereof.

In addition, the other specifications of each of the power reception coil RC3 of the third embodiment and the power reception coil of the third known example used in the experiment of the third example are as follows.
- Sizes of the power reception coil RC3 and the power reception coil of the third known example: long side 266 mm × short side 160 mm
- Pitch PT3 (see Fig. 12(b) and Fig. 14): 5.0 mm (outermost circumference portion) to 8.0 mm (innermost circumference portion)
- Thickness of the copper thin film line in the copper thin film line RL311 or the like: 0.2 mm
- Distance between the power transmission coil and the power reception coil: 40 mm
- A ferrite sheet having the same thickness as each of the power transmission coil and the power reception coil is provided on a surface opposite to a facing surface of each of the power transmission coil and the power reception coil.

As indicated by hatching in Table 1, at the frequency (85 kilohertz) used for power transmission by the power transmission system of the third embodiment, it can be seen that the case of using the power reception coil RC3 of the third embodiment has better performance in impedance and Q value than the case of using the power transmission coil and the power reception coil of the third known example. That is, it can be said that the configuration like the above-described power reception coil RC3 (the configuration in which the copper thin film lines constituting each coil overlap each other) is more preferable in terms of reduction of the impedance and the inductance and improvement of the Q value.

In addition, as illustrated in Figs. 15 and 16, at the above-described frequency used for power transmission by the power transmission system of the third embodiment, in a case where the capacitance of the current adjustment capacitor Cp is 20 microfarads or more, the transmission efficiency is reduced, and in the meantime, the copper loss in the power reception loop coil RL31 (power reception loop coil RL32) is decreased. From the above, it can be said that the capacitance of the current adjustment capacitor Cp at the above-described frequency is desirably 20 microfarads or less.

As respectively described above, according to the power transmission using the power transmission system of the third embodiment including the power reception coil RC3 of the third embodiment, in addition to the effects of the power transmission using the power transmission system S of the first embodiment and the power transmission system of the second embodiment, the power transmission system further includes the current adjustment coil RL33 and the current adjustment coil RL34, the overall shape in plan view is formed into a polygon (rectangle) that is the same as the overall shapes in plan view of the power reception loop coil RL31 and the power reception loop coil RL32, and the position of at least the linear portion constituting a copper thin film line TL311 and the like as viewed from the center of the power reception coil RC3 and the position of at least the linear portion constituting a corresponding copper thin film line TL331 and the like as viewed from said center coincide with each other in plan view. Therefore, even in a case where the current adjustment coil RL33 and the current adjustment coil RL34 are provided, it is possible to reduce the impedance, and it is possible to concurrently achieve weight reduction and cost reduction, and improvement of transmission efficiency and prevention of an increase in operating temperature.

In addition, since the current adjustment coil RL33 and the current adjustment coil RL34 are laminated at the same position as the power reception loop coil RL31 and the power reception loop coil RL32, it is possible to concurrently achieve weight reduction and cost reduction, and improvement of transmission efficiency and prevention of an increase in operating temperature while effectively adjusting the current flowing through the power reception loop coil RL31 and the power reception loop coil RL32.

Furthermore, since the current adjustment coil RL33 and the current adjustment coil RL34 are connected in series at the outermost circumference end portions thereof, the current adjustment capacitor Cp is connected to the innermost circumference portions thereof, and the capacitance thereof is optimized for the frequency of power transmission (set to 20 microfarads or less), even in a case where the current adjustment capacitor Cp is provided, it is possible to concurrently achieve weight reduction and cost reduction, and improvement of transmission efficiency and prevention of an increase in operation temperature.

### (D) Fourth embodiment

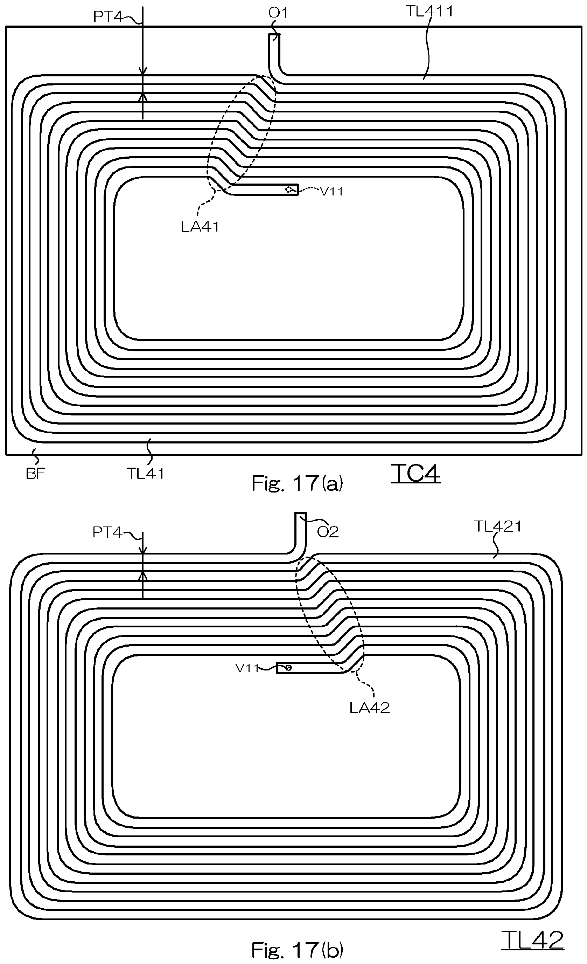

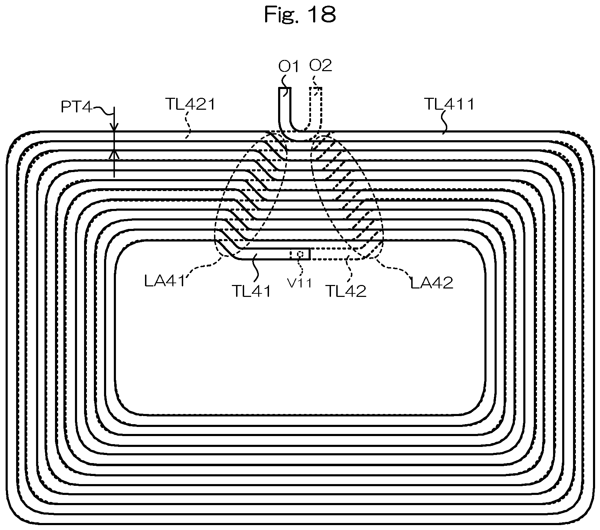

Next, a fourth embodiment of the present invention will be described with reference to Figs. 17 and 18. Note that Figs. 17 and 18 are plan views each illustrating the structure of a coil of the fourth embodiment.

In the power transmission coil TC1 and the like (power reception coil RC1 and the like) of the first to third embodiments described above, for example, in only one curved portion among the four curved portions included in one winding in the power transmission loop coil TL11, the copper thin film line TL111 and the copper thin film line TL112 constituting the power transmission loop coil TL11 are wound so that the position of the linear portion is shifted to the outer circumference side or the inner circumference side by one pitch in the winding of said power transmission loop coil TL11 (that is, in such a manner that the winding transitions to the outer circumference side or the inner circumference side) (see, for example, Fig. 4 or Fig. 10(b)). In contrast, in a power transmission coil (and a power reception coil) of the fourth embodiment to be described below, in only one linear portion among the four linear portions included in one winding in a power transmission loop coil (and a power reception loop coil) that constitutes the power transmission coil (and the power reception coil) by being mutually laminated, the copper thin film line constituting said power transmission loop coil (and said power reception loop coil) is wound in such a manner that the position of the linear portion is shifted to the outer circumference side or the inner circumference side by one pitch in the winding of said power transmission loop coil (and the power reception loop coil) (that is, in such a manner that the winding transitions to the outer circumference side or the inner circumference side). As a result, in the power transmission coil (and the power reception coil) of the fourth embodiment, the portion where the positions of the windings of the power transmission loop coil (and the power reception loop coil) to be laminated as viewed from the center of said power transmission coil (power reception coil) coincide with each other in plan view is configured wider.

Note that the configurations of the power transmission coil of the fourth embodiment and the power reception coil of the fourth embodiment are basically the same, and the configurations of the power reception loop coil in the power reception coil of the fourth embodiment and the power transmission loop coil in the power transmission coil of the fourth embodiment are the same. Therefore, in the following description, only the configuration of the power transmission coil of the fourth embodiment will be described. At this time, the same constituent members as those of the power transmission coil TC1 of the first embodiment are denoted by the same member numbers, and detailed description thereof is omitted.

That is, as illustrated in the plan view of Fig. 17(a), a power transmission coil TC4 of the fourth embodiment is configured by laminating a power transmission loop coil TL41 constituted of a copper thin film lines TL411 and a power transmission loop coil TL42 illustrated in the plan view of Fig. 17(b) in a direction perpendicular to the paper surface of Fig. 17 via an insulating film BF. In addition, the winding center of the copper thin film line TL411 constituting the power transmission loop coil TL41 and the winding center of a copper thin film line TL421 (Fig. 17(b)) constituting the power transmission loop coil TL42 coincide or substantially coincide with each other.

As illustrated in Fig. 17(a), the power transmission loop coil TL41 is constituted of the copper thin film line TL411 wound in one layer (the front surface of the film BF illustrated in Fig. 17(a)) of the power transmission coil TC4, and has, on one side of the outermost circumference portion thereof, an external connection terminal O1 that connects the copper thin film line TL411 to a power transmission unit not illustrated. The power transmission loop coil TL41 is configured by winding the copper thin film line TL411 six times (six turns) clockwise from the outermost circumference portion thereof in Fig. 17(a), and the outer circumference end portion (the center of the upper side portion in the case illustrated in Fig. 17(a)) of the copper thin film line TL411 is connected to the above-described external connection terminal O1. In addition, the inner circumference end portion (the end portion on the center side of the power transmission coil TC4 in the case illustrated in Fig. 17(a)) of the copper thin film line TL411 is connected to the copper thin film line constituting the power transmission loop coil TL42 formed on the back surface of the film BF through the via V11 penetrating the film BF. Note that the above-described copper thin film line TL411 has the same width and the same thickness over the entire circumference of the power transmission loop coil TL41. Furthermore, in the copper thin film line TL411, a linear portion is provided in each of the upper side portion, the lower side portion, the left side portion, and the right side portion in Fig. 17(a), and the respective linear portions are connected by a curved portion having a substantially concentric arc shape.

Next, a configuration of the power transmission loop coil TL42 laminated immediately below the above-described power transmission loop coil TL41 via the above-described film BF will be described with reference to Fig. 17(b). Note that Fig. 17(b) is a plan view illustrating only said power transmission loop coil TL42 taken out.

As illustrated in the plan view of Fig. 17(b), the power transmission loop coil TL42 laminated on the above-described power transmission loop coil TL41 with the film BF interposed therebetween is constituted of, for example, the copper thin film lines TL421. At this time, as described above, the winding center of the copper thin film line TL421 constituting the power transmission loop coil TL42 and the winding center of the copper thin film line TL411 constituting the above-described power transmission loop coil TL41 coincide or substantially coincide with each other. Furthermore, the overall shape of the power transmission loop coil TL42 is formed substantially rectangular, which is the same as the overall shape of the power transmission loop coil TL41.

As illustrated in Fig. 17(b), the power transmission loop coil TL42 is constituted of the above-described copper thin film line TL421 wound in another layer (the back surface of the film BF illustrated in Fig. 17(a)) of the power transmission coil TC4, and has, on one side of the outermost circumference portion thereof, an external connection terminal 02 that connects the copper thin film line TL421 to the above-described power transmission unit not illustrated. The power transmission loop coil TL42 is configured by winding the copper thin film line TL421 six times (six turns) clockwise from the innermost circumference portion thereof in Fig. 17(b), and the outer circumference end portion (the center of the upper side portion in the case illustrated in Fig. 17(b)) of the copper thin film line TL421 is connected to the above-described external connection terminal 02. Meanwhile, the inner circumference end portion (the end portion on the center side of the power transmission coil TC4 in the case illustrated in Fig. 17(b)) of the copper thin film line TL421 is connected to the copper thin film line TL411 of the power transmission loop coil TL41 through the above-described via V11. Note that the above-described copper thin film line TL421 has the same width and the same thickness over the entire circumference of the power transmission loop coil TL42. Furthermore, in the copper thin film line TL421, a linear portion is provided in each of the upper side portion, the lower side portion, the left side portion, and the right side portion in Fig. 17(b), and the respective linear portions are connected by a curved portion having a substantially concentric arc shape.

Next, a positional relationship between the above-described power transmission loop coil TL41 including the above-described copper thin film line TL411 and the above-described power transmission loop coil TL42 including the above-described copper thin film line TL421 will be described with reference to Fig. 18. Note that Fig. 18 is a plan view illustrating an overlapping state between the power transmission loop coil TL41 and the power transmission loop coil TL42, in which the power transmission loop coil TL41 (the copper thin film line TL411) is indicated by solid lines, and the power transmission loop coil TL42 (the copper thin film line TL421) laminated immediately therebelow via a film BF (not illustrated in Fig. 18) is indicated by broken lines.

As indicated by the solid lines in Fig. 18, in the power transmission loop coil TL41 including the copper thin film line TL411 wound from the outer periphery to the inner periphery, and connected at the innermost circumference portion thereof to the copper thin film line TL421 constituting the power transmission loop coil TL42 through the via V11, in only one linear portion (for example, the upper side portion in Fig. 18) among the above-described four linear portions included in the one winding, the copper thin film line TL411 is wound clockwise in such a manner that the position of the linear portion is shifted to the inner circumference side (that is, in such a manner that the winding transitions to the inner circumference side) by one pitch PT4 (see Fig. 17(a) and Fig. 18) in the winding of the copper thin film line TL411. As a result, the linear portion where the winding of the power transmission loop coil TL41 transitions to the inner circumference side by one pitch PT4 is, for example, six linear portions LA41 arranged from the outer circumference side to the inner circumference side at the upper side portion in Fig. 17(a) and Fig. 18.

In contrast, in the power transmission loop coil TL42 formed in such a manner that the copper thin film line TL421 connected at the innermost circumference portion thereof to the copper thin film line TL411 constituting the transmission loop coil TL41 through the via V11, is wound from the inner periphery to the outer periphery, as illustrated in a broken line in Fig. 18, in only one linear portion (for example, the upper side portion in Fig. 18) among the above-described four linear portions included in the one winding, the copper thin film line TL421 is wound clockwise (that is, in the same direction as the power transmission loop coil TL41) in such a manner that the position of the linear portion is shifted to the outer circumference side (that is, in such a manner that the winding transitions to the outer circumference side) by one pitch PT4 (see Fig. 17(b) and Fig. 18) in the winding of the copper thin film line TL421. As a result, the linear portion where the winding of the power transmission loop coil TL42 transitions to the outer circumference side by one pitch PT4 is, for example, six linear portions LA42 arranged from the inner circumference side to the outer circumference side at the upper side portion in Fig. 17(b) and Fig. 18. Furthermore, the outermost circumference portion of the power transmission loop coil TL41 on the upper side in Fig. 18 is connected to the external connection terminal 01 having a shape protruding outward, and the outermost circumference portion of the power transmission loop coil TL42 on the right side in Fig. 18 is connected to the external connection terminal 02 having a shape protruding outward.

Since the power transmission loop coil TL41 and the power transmission loop coil TL42 each having the shape as described above are laminated as illustrated in Fig. 18, the position of the copper thin film line TL411 and the position of the copper thin film line TL421 when viewed from the center of the power transmission coil TC4 coincide except for the linear portion where each winding transitions and connection portions to the external connection terminal 01 and the external connection terminal 02. Therefore, as the power transmission coil TC4, the power transmission loop coil TL41 and the power transmission loop coil TL42 are laminated with the film BF interposed therebetween in a state where each linear portion (excluding the transition portion of the winding) and each curved portion of the power transmission loop coil TL41 and each linear portion (excluding the transition portion of the winding) and each curved portion of the power transmission loop coil TL42 all overlap each other. As a result, with respect to the clockwise winding from the outermost circumference portion (external connection terminal 01) to the innermost circumference portion of the power transmission loop coil TL41, the power transmission loop coil TL42 is connected at said innermost circumference portion so as to be in the same winding direction, and the power transmission loop coil TL42 is wound from the innermost circumference portion to the outermost circumference portion while maintaining the winding direction. With this structure, as the power transmission coil TC4 of the fourth embodiment, a current flows clockwise from the outermost circumference portion toward the innermost circumference portion in the power transmission loop coil TL41, and the current flows in the same clockwise direction from the innermost circumference portion toward the outermost circumference portion in the power transmission loop coil TL42.

Note that the method of manufacturing the power transmission coil TC4 (and the power reception coil) of the fourth embodiment is basically the same as the above-described method of manufacturing the power transmission coil TC1 and the power reception coil RC1 of the first embodiment, and thus detailed description is omitted.

### Fourth example

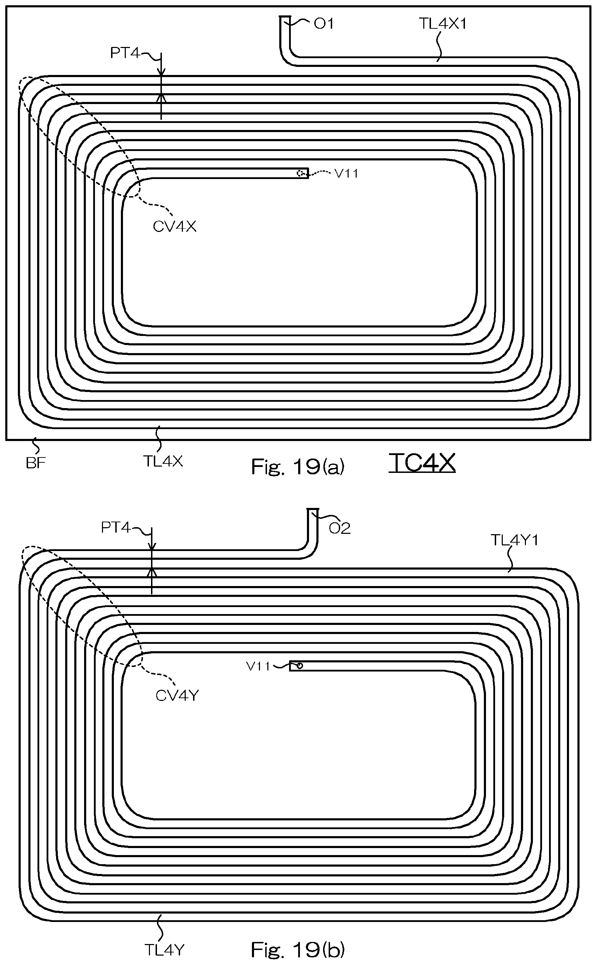

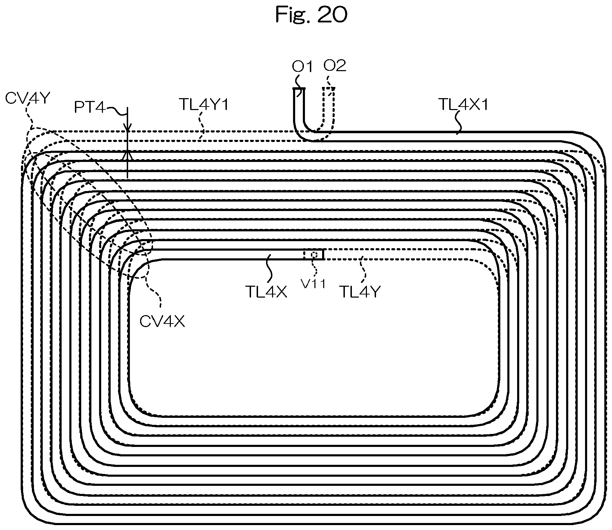

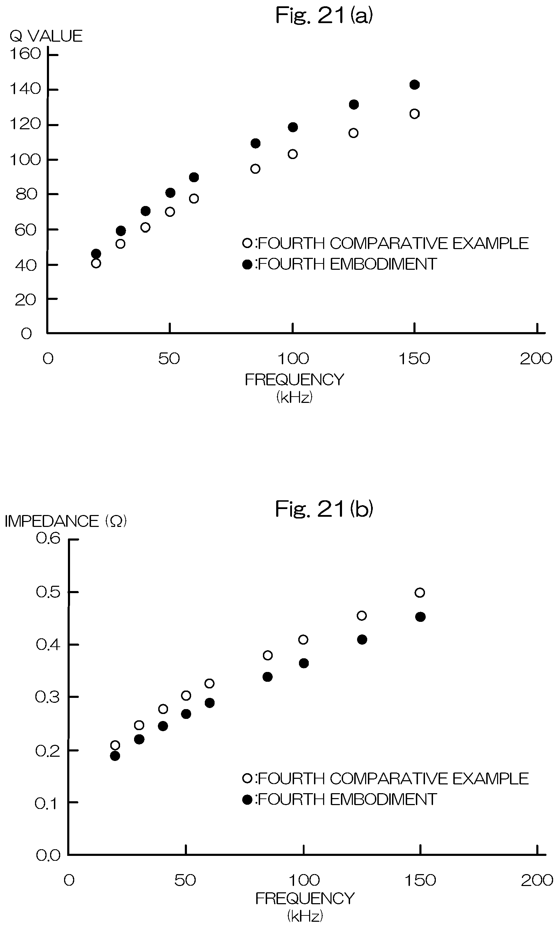

Next, results (simulation results) of respectively measuring the Q value and the impedance of the power transmission coil TC4 (or the power reception coil) by changing the frequency of the power transmission as the power transmission system using the power transmission coil TC4 (or the power reception coil) of the fourth embodiment having the configuration illustrated in Figs. 17 and 18 will be described as a fourth example with reference to Figs. 19 to 21 in comparison with a power transmission coil (power reception coil) of a fourth comparison example. Note that Figs. 19 and 20 are plan views each illustrating a structure of the coil of the fourth comparison example, and Fig. 21 is a figure illustrating an effect brought by the structure of the power transmission coil TC4 (or the power reception coil) of the fourth embodiment.

Here, before describing the above-described fourth example, an outline of the configuration of the power transmission coil or the power reception coil of the fourth comparison example to be compared will be described with reference to Figs. 19 and 20. Note that the power transmission coil and the power reception coil of the fourth comparison example basically have the same configuration. Therefore, in the following description, the structure of the power transmission coil of the fourth comparison example will be described. In addition, Figs. 19 and 20 are plan views illustrating the structure of the power transmission coil of the fourth comparison example when viewed from the same viewpoint as the power transmission coil TC4 of the fourth embodiment. At this time, in Figs. 19 and 20, the same members as those of the power transmission coil TC4 of the fourth embodiment are denoted by the same member numbers, and detailed description is omitted.

As illustrated in the plan view of Fig. 19(a), a power transmission coil TC4X of the fourth comparison example is configured in such a manner that a power transmission loop coil TL4X constituted of a copper thin film line TL4X1 and a power transmission loop coil TL4Y not illustrated in Fig. 19(a) are laminated in a direction perpendicular to the paper surface of Fig. 19 via an insulating film BF same as that in the power transmission coil TC4 of the fourth embodiment. At this time, the winding center of the copper thin film line TL4X1 constituting the power transmission loop coil TL4X and the winding center of a copper thin film line to be described later constituting the power transmission loop coil TL4Y coincide or substantially coincide with each other.

As illustrated in Fig. 19(a), the power transmission loop coil TL4X is constituted of the copper thin film line TL4X1 wound in one layer (the front surface of the film BF illustrated in Fig. 19(a)) of the power transmission coil TC4X, and has, on one side of the outermost circumference portion thereof, an external connection terminal O1 that connects the copper thin film line TL4X1 to a power transmission unit not illustrated. Then, the power transmission loop coil TL4X is configured by winding the copper thin film line TL4X1 six times (six turns) clockwise from the outermost circumference portion thereof in Fig. 19(a), and the outer circumference end portion (the center of the upper side portion in the case illustrated in Fig. 19(a)) of the copper thin film line TL4X1 is connected to the above-described external connection terminal 01. In addition, the inner circumference end portion (the end portion on the center side of the power transmission coil TC4X in the case illustrated in Fig. 19(a)) of the copper thin film line TL4X1 is connected to the copper thin film line constituting the power transmission loop coil TL4Y formed on the back surface of the film BF through the via V11 penetrating the film BF. Note that the above-described copper thin film line TL4X1 has the same width and the same thickness over the entire circumference of the power transmission loop coil TL4X. Furthermore, in the copper thin film line TL4X1, a linear portion is provided in each of the upper side portion, the lower side portion, the left side portion, and the right side portion in Fig. 19(a), and the respective linear portions are connected by a curved portion having a substantially concentric arc shape.

Next, a configuration of the power transmission loop coil TL4Y laminated immediately below the above-described power transmission loop coil TL4X via the above-described film BF will be described with reference to Fig. 19(b). Note that Fig. 19(b) is a plan view illustrating only said power transmission loop coil TL4Y taken out.

As illustrated in the plan view of Fig. 19(b), the power transmission loop coil TL4Y laminated on the above-described power transmission loop coil TL4X with the film BF interposed therebetween is constituted of a copper thin film line TL4Y1. At this time, the winding center of the copper thin film line TL4Y1 constituting the power transmission loop coil TL4Y and the winding center of the copper thin film line TL4X1 constituting the above-described power transmission loop coil TL4X coincide or substantially coincide with each other. Furthermore, the overall shape of the power transmission loop coil TL4Y is formed substantially rectangular, which is the same as the overall shape of the power transmission loop coil TL4X.

As illustrated in Fig. 19(b), the power transmission loop coil TL4Y is constituted of the above-described copper thin film line TL4Y1 wound in another layer (the back surface of the film BF illustrated in Fig. 19(a)) of the power transmission coil TC4X, and has, on one side of the outermost circumference portion thereof, an external connection terminal 02 that connects the copper thin film line TL4Y1 to a power transmission unit not illustrated. The power transmission loop coil TL4Y is configured by winding the copper thin film line TL4Y1 six times (six turns) clockwise from the innermost circumference portion thereof in Fig. 19(b), and the outer circumference end portion (the center of the upper side portion in the case illustrated in Fig. 19(b)) of the copper thin film line TL4Y1 is connected to the above-described external connection terminal 02. Meanwhile, the inner circumference end portion (the end portion on the center side of the power transmission coil TC4X in the case illustrated in Fig. 19(b)) of the copper thin film line TL4Y1 is connected to the copper thin film line TL4X1 of the power transmission loop coil TL4X through the above-described via V11. Note that the above-described copper thin film line TL4Y1 has the same width and the same thickness over the entire circumference of the power transmission loop coil TL4Y. Furthermore, in the copper thin film line TL4Y1, a linear portion is provided in each of the upper side portion, the lower side portion, the left side portion, and the right side portion in Fig. 19(b), and the respective linear portions are connected by a curved portion having a substantially concentric arc shape.

Next, a positional relationship between the above-described power transmission loop coil TL4X including the above-described copper thin film line TL4X1 and the above-described power transmission loop coil TL4Y including the above-described copper thin film line TL4Y1 will be described with reference to Fig. 20. Note that Fig. 20 is a plan view illustrating an overlapping state between the power transmission loop coil TL4X and the power transmission loop coil TL4Y, in which the power transmission loop coil TL4X is indicated by solid lines, and the power transmission loop coil TL4Y laminated immediately therebelow via the film BF (not illustrated in Fig. 20) is indicated by broken lines.

As indicated by the solid lines in Fig. 20, in the power transmission loop coil TL4X including the copper thin film line TL4X1 wound from the outer periphery to the inner periphery, and connected at the innermost circumference portion thereof to the copper thin film line TL4Y1 constituting the power transmission loop coil TL4Y through the via V11, in only one curved portion (for example, the upper left corner portion in Fig. 20) among the above-described four curved portions included in the one winding, the copper thin film line TL4X1 is wound clockwise in such a manner that the position of the linear portion is shifted to the inner circumference side (that is, in such a manner that the winding transitions to the inner circumference side) by one pitch PT4 in the winding of the copper thin film line TL4X1. As a result, the curved portion where the winding of the power transmission loop coil TL4X transitions to the inner circumference side by one pitch PT4 is, for example, six curved portions CV4X arranged from the outer circumference side to the inner circumference side at the upper left corner portion in Fig. 19(a) and Fig. 20.

In contrast, in the power transmission loop coil TL4Y formed in such a manner that the copper thin film line TL4Y1 connected at the innermost circumference portion thereof to the copper thin film line TL4X1 constituting the power transmission loop coil TL4X through the via V11, is wound from the inner periphery to the outer periphery, as illustrated in a broken line in Fig. 20, in only one curved portion (for example, the curved portion at the upper left corner portion in Fig. 20) among the above-described four curved portions included in the one winding, the copper thin film line TL4Y1 is wound clockwise in such a manner that the position of the linear portion is shifted to the outer circumference side (that is, in such a manner that the winding transitions to the outer circumference side) by one pitch PT4 in the winding of the copper thin film line TL4Y1. As a result, the curved portion where the winding of the power transmission loop coil TL4Y transitions to the outer circumference side by one pitch PT4 is, for example, six curved portions CV4Y arranged from the inner circumference side to the outer circumference side at the upper left corner portion in Fig. 19(b) and Fig. 20. Furthermore, the outermost circumference portion of the power transmission loop coil TL4X on the upper side in Fig. 20 is connected to the external connection terminal 01 having a shape protruding outward, and the outermost circumference portion of the power transmission loop coil TL4Y on the upper side in Fig. 20 is connected to the external connection terminal 02 having a shape protruding outward.

Since the power transmission loop coil TL4X and the power transmission loop coil TL4Y each having the shape as described above are laminated as illustrated in Fig. 20, the position of the copper thin film line TL4X1 and the position of the copper thin film line TL4Y1 when viewed from the center of the power transmission coil TC4X are different in the two curved portions and connection portions to the external connection terminal O1 and the external connection terminal O2 as illustrated in Fig. 20. Therefore, as the power transmission coil TC4X, the power transmission loop coil TL4X and the power transmission loop coil TL4Y are laminated with the film BF interposed therebetween in a state having more portions where the power transmission loop coil TL4X and the power transmission loop coil TL4Y do not overlap each other than the power transmission coil TC4 of the fourth embodiment. As a result, with respect to the clockwise winding from the outermost circumference portion (external connection terminal O1) to the innermost circumference portion of the power transmission loop coil TL4X, the power transmission loop coil TL4Y is connected at said innermost circumference portion so as to be in the same winding direction, and the power transmission loop coil TL4Y is wound from the innermost circumference portion to the outermost circumference portion while maintaining the winding direction. With this structure, as the power transmission coil TC4X of the fourth comparison example, a current flows clockwise from the outermost circumference portion toward the innermost circumference portion in the power transmission loop coil TL4X, and the current flows in the same clockwise direction from the innermost circumference portion toward the outermost circumference portion in the power transmission loop coil TL4Y.

In addition, the other specifications of each of the power transmission coil TC4 of the fourth embodiment and the power transmission coil TC4X of the fourth comparison example used in the experiment of the fourth example are as follows. Note that in the following description, the specifications of the power transmission coil TC4 and the power transmission coil TC4X will be described, but the specifications of the power reception coil of the fourth embodiment used in the experiment are the same as the specifications of the power transmission coil TC4, and the specifications of the power reception coil of the fourth comparison example are the same as the specifications of the power transmission coil TC4X.
- Sizes of the power transmission coil TC4 (and the power reception coil of the fourth embodiment) and the power transmission coil TC4X (and the power reception coil of the fourth known example): 160 mm × 260 mm
- Pitch PT4: 8 mm
- Thickness of the copper thin film line in the copper thin film line TL411 and the like: 0.2 mm

As illustrated in Fig. 21, in the vicinity of the frequency (85 kilohertz) used for power transmission by the power transmission system, the impedance is lower in the case of using the power transmission coil TC4 and the power reception coil of the fourth embodiment than in the case of using the power transmission coil TC4X and the power reception coil of the fourth comparison example, and thus good characteristics are obtained for the Q value.

As respectively described above, according to the power transmission using the power transmission system including the power transmission coil TC4 of the fourth embodiment and the power reception coil of the fourth embodiment, each of the overall shapes in a plan view of the power transmission loop coil TL41 and the power transmission loop coil TL42 is a mutually identical substantially rectangular shape, and the position of the power transmission loop coil TL41 viewed from the center of the power transmission coil TC4 of each winding coincides with the position of the power transmission loop coil TL42 viewed from the center of the power transmission coil TC4 of each winding in plan view (see Fig. 18). Therefore, it is possible to reduce the impedance due to the so-called skin effect or proximity effect caused by configuring the power transmission coil TC4 and the power reception coil of the fourth embodiment by the copper thin film line for weight reduction and cost reduction, and it is possible to concurrently achieve weight reduction and cost reduction, and improvement in transmission efficiency and prevention of an increase in operation temperature.

### (E) Fifth embodiment

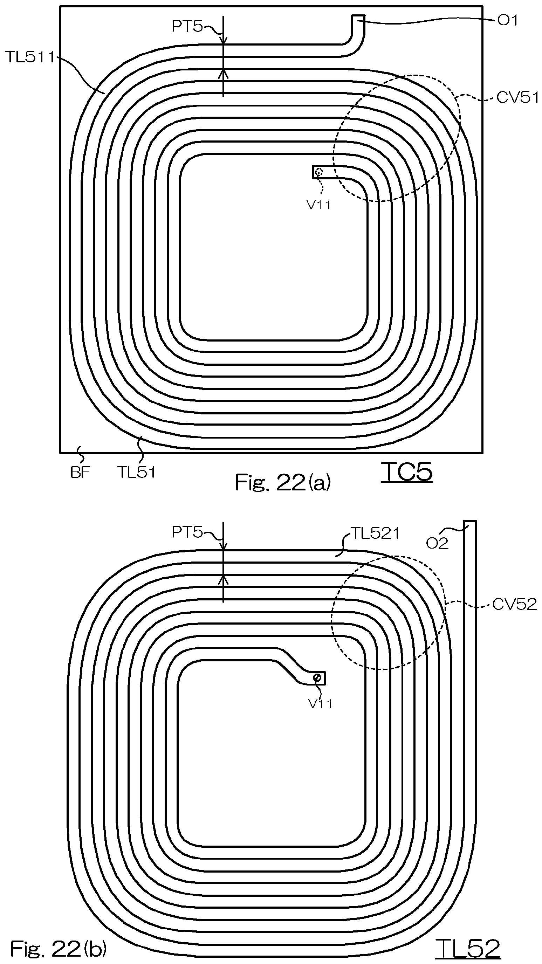

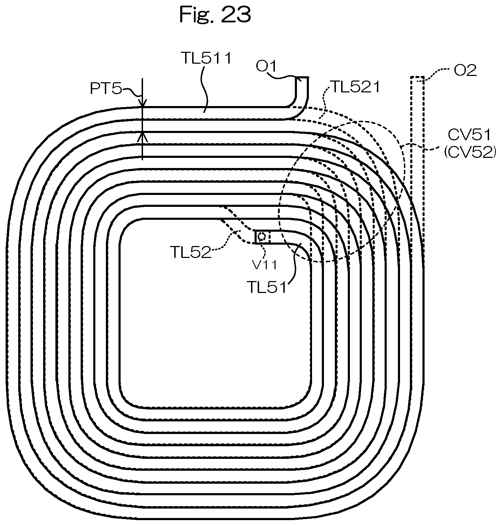

Next, a fifth embodiment of the present invention will be described with reference to Figs. 22 and 23. Note that Figs. 22 and 23 are plan views each illustrating the structure of a coil of the fifth embodiment.

In the power transmission coil TC1 and the like (power reception coil RC1 and the like) of the first to fourth embodiments described above, for example, the copper thin film line TL111 and the copper thin film line TL112 constituting the power transmission loop coil TL11 and the copper thin film line TL121 and the copper thin film line TL122 constituting the transmission loop coil TL12 are respectively wound in such a manner that the position where the winding in said transmission loop coil TL11 transitions by one pitch, and the position where the winding in said transmission loop coil TL12 transitions by one pitch are different when viewed from the center of the power transmission coil TC1 (see, for example, Fig. 4 or Fig. 10(b)). In contrast, in the power transmission coil (and the power reception coil) of the fifth embodiment to be described below, in only one curved portion among the four curved portions included in one winding in said power transmission loop coil (and said power reception loop coil) that constitutes the power transmission coil (and the power reception coil) by being mutually laminated, the copper thin film line constituting the power transmission loop coil (and the power reception loop coil) is wound in such a manner that the position of the linear portion is shifted to the outer circumference side or the inner circumference side by one pitch in the winding of said power transmission loop coil (and said power reception loop coil) (that is, in such a manner that the winding transitions to the outer circumference side or the inner circumference side). In addition, in the power transmission coil (and the power reception coil) of the fifth embodiment, the copper thin film line constituting the power transmission loop coil (and the power reception loop coil) is wound in such a manner that the position of one curved portion where the above-described winding transitions is the same as viewed from the center of said power transmission coil (and said power reception coil). As a result, the power transmission coil (and the power reception coil) of the fifth embodiment is configured in such a manner that the positions of four linear portions and three curved portions when viewed from the center of the power transmission coil (power reception coil) in said one winding among each of the windings of said power transmission loop coil (and the power reception loop coil) to be laminated coincide with each other in plan view.

Note that the configurations of the power transmission coil of the fifth embodiment and the power reception coil of the fifth embodiment are basically the same, and the configurations of the power reception loop coil in the power reception coil of the fifth embodiment and the power transmission loop coil in the power transmission coil of the fifth embodiment are the same. Therefore, in the following description, only the configuration of the power transmission coil of the fifth embodiment will be described. At this time, the same constituent members as those of the power transmission coil TC1 of the first embodiment are denoted by the same member numbers, and detailed description thereof is omitted.

That is, as illustrated in the plan view of Fig. 22(a), a power transmission coil TC5 of the fifth embodiment is configured by laminating a power transmission loop coil TL51 constituted of a copper thin film line TL511 and a power transmission loop coil TL52 illustrated in the plan view of Fig. 22(b) in a direction perpendicular to the paper surface of Fig. 22 via an insulating film BF. In addition, the winding center of the copper thin film line TL511 constituting the power transmission loop coil TL51 and the winding center of a copper thin film line TL521 (Fig. 22(b)) constituting the power transmission loop coil TL52 coincide or substantially coincide with each other.

As illustrated in Fig. 22(a), the power transmission loop coil TL51 is constituted of the copper thin film line TL511 wound in one layer (the front surface of the film BF illustrated in Fig. 22(a)) of the power transmission coil TC5, and has, on one side of the outermost circumference portion thereof, an external connection terminal O1 that connects the copper thin film line TL511 to a power transmission unit not illustrated. Then, the power transmission loop coil TL51 is configured by winding the copper thin film line TL511 five times (five turns) counterclockwise from the outermost circumference portion thereof in Fig. 22(a), and the outer circumference end portion (the right end portion of the upper side portion in the case illustrated in Fig. 22(a)) of the copper thin film line T511 is connected to the above-described external connection terminal O1. In addition, the inner circumference end portion (the end portion on the center side of the power transmission coil TC5 in the case illustrated in Fig. 22(a)) of the copper thin film line TL511 is connected to the copper thin film line constituting the power transmission loop coil TL52 formed on the back surface of the film BF through the via V11 penetrating the film BF. Note that the above-described copper thin film line TL511 has the same width and the same thickness over the entire circumference of the power transmission loop coil TL51. Furthermore, in the copper thin film line TL511, a linear portion is provided in each of the upper side portion, the lower side portion, the left side portion, and the right side portion in Fig. 22(a), and the respective linear portions are connected by a curved portion having a substantially concentric arc shape.

Next, a configuration of the power transmission loop coil TL52 laminated immediately below the above-described power transmission loop coil TL51 via the above-described film BF will be described with reference to Fig. 22(b). Note that Fig. 22(b) is a plan view illustrating only said power transmission loop coil TL52 taken out.

As illustrated in the plan view of Fig. 22(b), the power transmission loop coil TL52 laminated on the above-described power transmission loop coil TL51 with the film BF interposed therebetween is constituted of, for example, the copper thin film lines TL521. At this time, as described above, the winding center of the copper thin film line TL521 constituting the power transmission loop coil TL52 and the winding center of the copper thin film line TL511 constituting the above-described power transmission loop coil TL51 coincide or substantially coincide with each other. Furthermore, the overall shape of the power transmission loop coil TL52 is formed substantially square, which is the same as the overall shape of the power transmission loop coil TL41.

As illustrated in Fig. 22(b), the power transmission loop coil TL52 is constituted of the above-described copper thin film line TL521 wound in another layer (the back surface of the film BF illustrated in Fig. 22(a)) of the power transmission coil TC5, and has, on one side of the outermost circumference portion thereof, an external connection terminal O2 that connects the copper thin film line TL521 to the above-described power transmission unit not illustrated. Then, the power transmission loop coil TL52 is configured by winding the copper thin film line TL521 five times (five turns) counterclockwise from the innermost circumference portion thereof in Fig. 22(b), and the outer circumference end portion (the upper right end portion in the case illustrated in Fig. 22(b)) of the copper thin film line TL521 is connected to the above-described external connection terminal O2. Meanwhile, the inner circumference end portion (the end portion on the center side of the power transmission coil TC5 in the case illustrated in Fig. 22(b)) of the copper thin film line TL521 is connected to the copper thin film line TL511 of the power transmission loop coil TL51 through the above-described via V11. Note that the above-described copper thin film line TL521 has the same width and the same thickness over the entire circumference of the power transmission loop coil TL52. Furthermore, in the copper thin film line TL521, a linear portion is provided in each of the upper side portion, the lower side portion, the left side portion, and the right side portion in Fig. 22(b), and the respective linear portions are connected by a curved portion having a substantially concentric arc shape.

Next, a positional relationship between the above-described power transmission loop coil TL51 including the above-described copper thin film line TL511 and the above-described power transmission loop coil TL52 including the above-described copper thin film line TL521 will be described with reference to Fig. 23. Note that Fig. 23 is a plan view illustrating an overlapping state between the power transmission loop coil TL51 and the power transmission loop coil TL52, in which the power transmission loop coil TL51 (the copper thin film line TL511) is indicated by solid lines, and the power transmission loop coil TL52 (the copper thin film line TL521) laminated immediately therebelow via a film BF (not illustrated in Fig. 23) is indicated by broken lines.

As indicated by the solid lines in Fig. 23, in the power transmission loop coil TL51 including the copper thin film line TL511 wound from the outer periphery to the inner periphery, and connected at the innermost circumference portion thereof to the copper thin film line TL521 constituting the power transmission loop coil TL52 through the via V11, in only one curved portion (for example, the upper right portion in Fig. 23) among the above-described four curved portions included in the one winding, the copper thin film line TL511 is wound counterclockwise in such a manner that the position of the linear portion is shifted to the inner circumference side (that is, in such a manner that the winding transitions to the inner circumference side) by one pitch PT5 (see Fig. 22(a) and Fig. 23) in the winding of the copper thin film line TL511. As a result, the linear portion where the winding of the power transmission loop coil TL51 transitions to the inner circumference side by one pitch PT5 is, for example, five curved portions CV51 arranged from the outer circumference side to the inner circumference side at the upper right portion in Fig. 22(a) and Fig. 23.

In contrast, in the power transmission loop coil TL52 formed in such a manner that the copper thin film line TL521 connected at the innermost circumference portion thereof to the copper thin film line TL511 constituting the transmission loop coil TL51 through the via V11, is wound from the inner periphery to the outer periphery, as illustrated in a broken line in Fig. 23, in only one curved portion (for example, the upper right portion in Fig. 18) among the above-described four curved portions included in the one winding, the copper thin film line TL521 is wound counterclockwise (that is, in the same direction as the power transmission loop coil TL51) in such a manner that the position of the linear portion is shifted to the outer circumference side (that is, in such a manner that the winding transitions to the outer circumference side) by one pitch PT5 (see Fig. 22(b) and Fig. 23) in the winding of the copper thin film line TL521. As a result, the curved portion where the winding of the power transmission loop coil TL52 transitions to the outer circumference side by one pitch PT5 is, for example, five curved portions CV52 arranged from the inner circumference side to the outer circumference side at the upper right portion in Fig. 22(b) and Fig. 23. Furthermore, the right end portion of the power transmission loop coil TL51 on the upper side in Fig. 23 is connected to the external connection terminal O1 having a shape protruding outward, and the right end portion of the power transmission loop coil TL52 on the upper side in Fig. 23 is connected to the external connection terminal O2 having a shape protruding outward.

Since the power transmission loop coil TL51 and the power transmission loop coil TL52 each having the shape as described above are laminated as illustrated in Fig. 23, the position of the copper thin film line TL511 and the position of the copper thin film line TL521 when viewed from the center of the power transmission coil TC5 coincide except for the one curved portion where each winding transitions and connection portions to the external connection terminal O1 and the external connection terminal O2. Therefore, as the power transmission coil TC5, the power transmission loop coil TL51 and the power transmission loop coil TL52 are laminated with the film BF interposed therebetween in a state where each linear portion and each curved portion (excluding the transition portion of the winding) of the power transmission loop coil TL51 and each linear portion and each curved portion (excluding the transition portion of the winding) of the power transmission loop coil TL52 all overlap each other. As a result, with respect to the counterclockwise winding from the outermost circumference portion (external connection terminal O1) to the innermost circumference portion of the power transmission loop coil TL51, the power transmission loop coil TL52 is connected at said innermost circumference portion so as to be in the same winding direction, and the power transmission loop coil TL52 is wound from the innermost circumference portion to the outermost circumference portion while maintaining the winding direction. With this structure, as the power transmission coil TC5 of the fifth embodiment, a current flows counterclockwise from the outermost circumference portion toward the innermost circumference portion in the power transmission loop coil TL51, and the current flows in the same clockwise direction from the innermost circumference portion toward the outermost circumference portion in the power transmission loop coil TL52.

Note that the method of manufacturing the power transmission coil TC5 (and the power reception coil) of the fifth embodiment is basically the same as the above-described method of manufacturing the power transmission coil TC1 and the power reception coil RC1 of the first embodiment, and thus detailed description is omitted.

### Fifth example

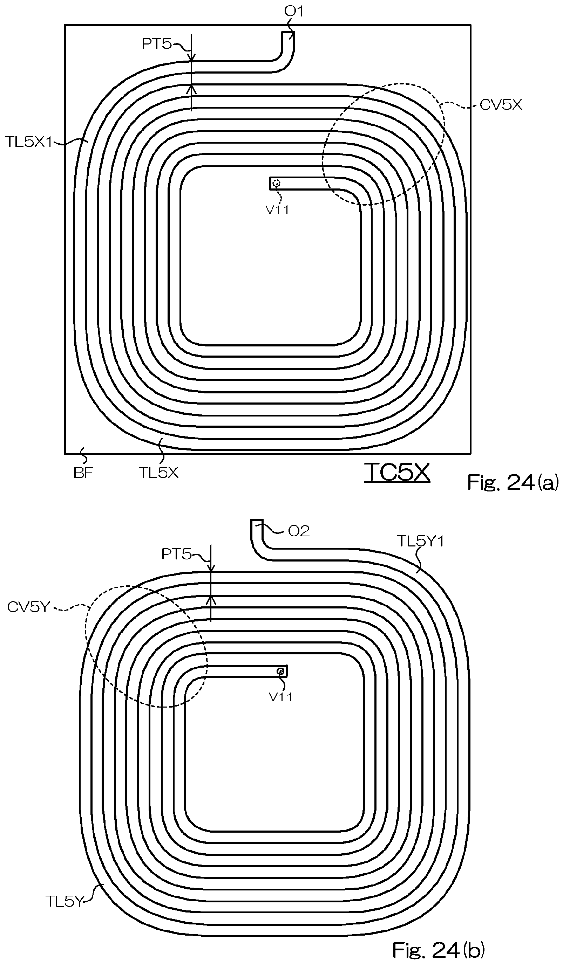

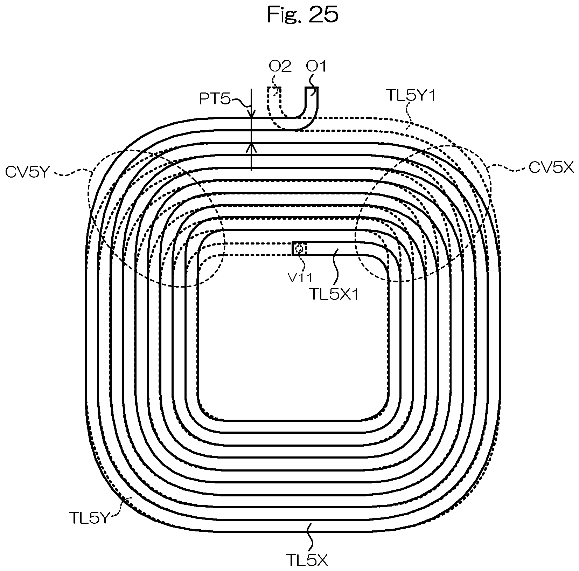

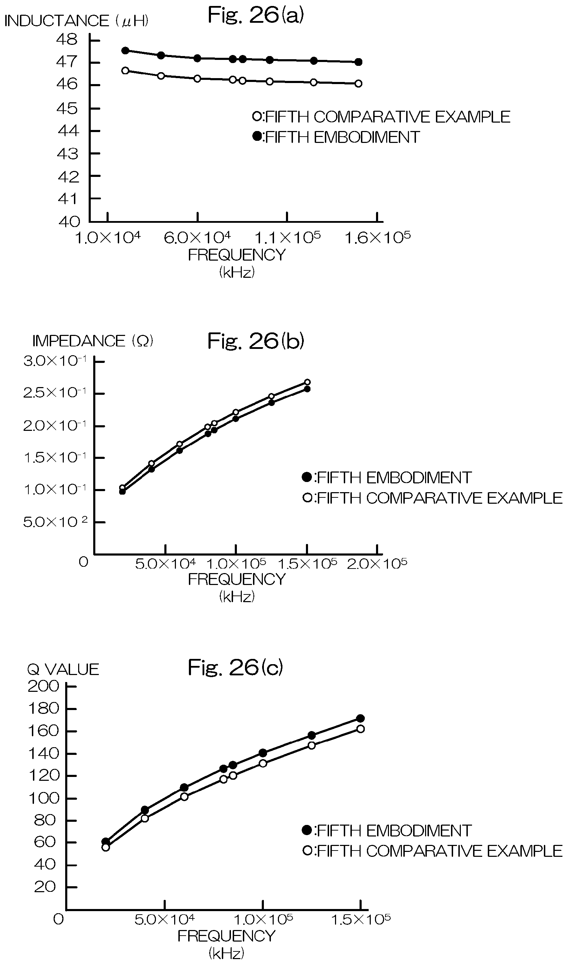

Next, results (simulation results) of respectively measuring the inductance, the impedance, and the Q value of the power transmission coil TC5 (or the power reception coil) by changing the frequency of the power transmission as the power transmission system using the power transmission coil TC5 (or the power reception coil) of the fifth embodiment having the configuration illustrated in Figs. 22 and 23 will be described as a fifth example with reference to Figs. 24 to 26 in comparison with a power transmission coil (power reception coil) of a fifth comparison example. Note that Figs. 24 and 25 are plan views each illustrating a structure of the coil of the fifth comparison example, and Fig. 26 is a figure illustrating an effect brought by the structure of the power transmission coil TC5 (or the power reception coil) of the fifth embodiment.

Here, before describing the above-described fifth example, an outline of the configuration of the power transmission coil or the power reception coil of the fifth comparison example to be compared will be described with reference to Figs. 24 and 25. Note that the power transmission coil and the power reception coil of the fifth comparison example basically have the same configuration. Therefore, in the following description, the structure of the power transmission coil of the fifth comparison example will be described. In addition, Figs. 24 and 25 are plan views illustrating the structure of the power transmission coil of the fifth comparison example when viewed from the same viewpoint as the power transmission coil TC5 of the fifth embodiment. At this time, in Figs. 24 and 25, the same members as those of the power transmission coil TC5 of the fifth embodiment are denoted by the same member numbers, and detailed description is omitted.

As illustrated in the plan view of Fig. 24(a), a power transmission coil TC5X of the fifth comparison example is configured in such a manner that a power transmission loop coil TL5X constituted of a copper thin film line TL5X1 and a power transmission loop coil TL5Y not illustrated in Fig. 24(a) are laminated in a direction perpendicular to the paper surface of Fig. 24 via an insulating film BF same as that in the power transmission coil TC5 of the fifth embodiment. At this time, the winding center of the copper thin film line TL5X1 constituting the power transmission loop coil TL5X and the winding center of a copper thin film line to be described later constituting the power transmission loop coil TL5Y coincide or substantially coincide with each other.

As illustrated in Fig. 24(a), the power transmission loop coil TL5X is constituted of the copper thin film line TL5X1 wound in one layer (the front surface of the film BF illustrated in Fig. 24(a)) of the power transmission coil TC5X, and has, on one side of the outermost circumference portion thereof, an external connection terminal O1 that connects the copper thin film line TL5X1 to a power transmission unit not illustrated. Then, the power transmission loop coil TL5X is configured by winding the copper thin film line TL5X1 five times (five turns) counterclockwise from the outermost circumference portion thereof in Fig. 24(a), and the outer circumference end portion (the center of the upper side portion in the case illustrated in Fig. 24(a)) of the copper thin film line TL5X1 is connected to the above-described external connection terminal O1. In addition, the inner circumference end portion (the end portion on the center side of the power transmission coil TC5X in the case illustrated in Fig. 24(a)) of the copper thin film line TL5X1 is connected to the copper thin film line constituting the power transmission loop coil TL5Y formed on the back surface of the film BF through the via V11 penetrating the film BF. Note that the above-described copper thin film line TL5X1 has the same width and the same thickness over the entire circumference of the power transmission loop coil TL5X. Furthermore, in the copper thin film line TL5X1, a linear portion is provided in each of the upper side portion, the lower side portion, the left side portion, and the right side portion in Fig. 24(a), and the respective linear portions are connected by a curved portion having a substantially concentric arc shape.

Next, a configuration of the power transmission loop coil TL5Y laminated immediately below the above-described power transmission loop coil TL5X via the above-described film BF will be described with reference to Fig. 24(b). Note that Fig. 24(b) is a plan view illustrating only said power transmission loop coil TL5Y taken out.

As illustrated in the plan view of Fig. 24(b), the power transmission loop coil TL5Y laminated on the above-described power transmission loop coil TL5X with the film BF interposed therebetween is constituted of a copper thin film line TL5Y1. At this time, the winding center of the copper thin film line TL5Y1 constituting the power transmission loop coil TL5Y and the winding center of the copper thin film line TL5X1 constituting the above-described power transmission loop coil TL5X coincide or substantially coincide with each other. Furthermore, the overall shape of the power transmission loop coil TL5Y is formed substantially square, which is the same as the overall shape of the power transmission loop coil TL5X.

As illustrated in Fig. 24(b), the power transmission loop coil TL5Y is constituted of the above-described copper thin film line TL5Y1 wound in another layer (the back surface of the film BF illustrated in Fig. 24(a)) of the power transmission coil TC5X, and has, on one side of the outermost circumference portion thereof, an external connection terminal O2 that connects the copper thin film line TL5Y1 to a power transmission unit not illustrated. The power transmission loop coil TL5Y is configured by winding the copper thin film line TL5Y1 five times (five turns) clockwise from the innermost circumference portion thereof in Fig. 24(b), and the outer circumference end portion (the center of the upper side portion in the case illustrated in Fig. 24(b)) of the copper thin film line TL5Y1 is connected to the above-described external connection terminal O2. Meanwhile, the inner circumference end portion (the end portion on the center side of the power transmission coil TC5X in the case illustrated in Fig. 24(b)) of the copper thin film line TL5Y1 is connected to the copper thin film line TL5X1 of the power transmission loop coil TL5X through the above-described via V11. Note that the above-described copper thin film line TL5Y1 has the same width and the same thickness over the entire circumference of the power transmission loop coil TL5Y. Furthermore, in the copper thin film line TL5Y1, a linear portion is provided in each of the upper side portion, the lower side portion, the left side portion, and the right side portion in Fig. 24(b), and the respective linear portions are connected by a curved portion having a substantially concentric arc shape.

Next, a positional relationship between the above-described power transmission loop coil TL5X including the above-described copper thin film line TL5X1 and the above-described power transmission loop coil TL5Y including the above-described copper thin film line TL5Y1 will be described with reference to Fig. 25. Note that Fig. 25 is a plan view illustrating an overlapping state between the power transmission loop coil TL5X and the power transmission loop coil TL5Y, in which the power transmission loop coil TL5X is indicated by solid lines, and the power transmission loop coil TL5Y laminated immediately therebelow via the film BF (not illustrated in Fig. 25) is indicated by broken lines.

As indicated by the solid lines in Fig. 25, in the power transmission loop coil TL5X including the copper thin film line TL5X1 wound from the outer periphery to the inner periphery, and connected at the innermost circumference portion thereof to the copper thin film line TL5Y1 constituting the power transmission loop coil TL5Y through the via V11, in only one curved portion (for example, the curved portion at the upper right corner portion in Fig. 25) among the above-described four linear portions included in the one winding, the copper thin film line TL5X1 is wound counterclockwise in such a manner that the position of the linear portion is shifted to the inner circumference side (that is, in such a manner that the winding transitions to the inner circumference side) by one pitch PT5 in the winding of the copper thin film line TL5X1. As a result, the curved portion where the winding of the power transmission loop coil TL5X transitions to the inner circumference side by one pitch PT5 is, for example, five curved portions CV5X arranged from the outer circumference side to the inner circumference side at the upper left corner portion in Fig. 24(a) and Fig. 25.

In contrast, in the power transmission loop coil TL5Y formed in such a manner that the copper thin film line TL5Y1 connected at the innermost circumference portion thereof to the copper thin film line TL5X1 constituting the power transmission loop coil TL5X through the via V11, is wound from the inner periphery to the outer periphery, as illustrated in a broken line in Fig. 25, in only one curved portion (for example, the curved portion at the upper left corner portion in Fig. 25) among the above-described four curved portions included in the one winding, the copper thin film line TL5Y1 is wound clockwise in such a manner that the position of the linear portion is shifted to the outer circumference side (that is, in such a manner that the winding transitions to the outer circumference side) by one pitch PT5 in the winding of the copper thin film line TL5Y1. As a result, the curved portion where the winding of the power transmission loop coil TL5Y transitions to the outer circumference side by one pitch PT5 is, for example, five curved portions CV5Y arranged from the inner circumference side to the outer circumference side at the upper left corner portion in Fig. 24(b) and Fig. 24. Furthermore, the outermost circumference portion of the power transmission loop coil TL5X on the upper side in Fig. 25 is connected to the external connection terminal O1 having a shape protruding outward, and the outermost circumference portion of the power transmission loop coil TL5Y on the upper side in Fig. 25 is connected to the external connection terminal O2 having a shape protruding outward.

Since the power transmission loop coil TL5X and the power transmission loop coil TL5Y each having the shape as described above are laminated as illustrated in Fig. 25, the position of the copper thin film line TL5X1 and the position of the copper thin film line TL5Y1 when viewed from the center of the power transmission coil TC5X are different in the two curved portions and connection portions to the external connection terminal O1 and the external connection terminal O2 as illustrated in Fig. 25. Therefore, as the power transmission coil TC5X, the power transmission loop coil TL5X and the power transmission loop coil TL5Y are laminated with the film BF interposed therebetween in a state having more portions where the power transmission loop coil TL5X and the power transmission loop coil TL5Y do not overlap each other than the power transmission coil TC5 of the fifth embodiment. As a result, with respect to the clockwise winding from the outermost circumference portion (external connection terminal O1) to the innermost circumference portion of the power transmission loop coil TL5X, the power transmission loop coil TL5Y is connected at said innermost circumference portion so as to be in the same winding direction, and the power transmission loop coil TL5Y is wound from the innermost circumference portion to the outermost circumference portion while maintaining the winding direction. With this structure, as the power transmission coil TC5X of the fifth comparison example, a current flows clockwise from the outermost circumference portion toward the innermost circumference portion in the power transmission loop coil TL5X, and the current flows in the same clockwise direction from the innermost circumference portion toward the outermost circumference portion in the power transmission loop coil TL5Y.

In addition, the other specifications of each of the power transmission coil TC5 of the fifth embodiment and the power transmission coil TC5X of the fifth comparison example used in the experiment of the fifth example are as follows. Note that in the following description, the specifications of the power transmission coil TC5 and the power transmission coil TC5X will be described, but the specifications of the power reception coil of the fifth embodiment used in the experiment are the same as the specifications of the power transmission coil TC5, and the specifications of the power reception coil of the fifth comparison example are the same as the specifications of the power transmission coil TC5X.
- Sizes of the power transmission coil TC5 (and the power reception coil of the fifth embodiment) and the power transmission coil TC5X (and the power reception coil of fifth known example): 300 mm × 300 mm
- Pitch PT5: 18 mm
- Thickness of the copper thin film line in the copper thin film line TL511 and the like: 0.2 mm

As illustrated in Fig. 26, in the vicinity of the frequency (85 kilohertz) used for power transmission by the power transmission system, the inductance is higher and the impedance is lower in the case of using the power transmission coil TC5 and the power reception coil of the fifth embodiment than in the case of using the power transmission coil TC5X and the power reception coil of the fifth comparison example, and thus good characteristics are obtained for the Q value.

As respectively described above, according to the power transmission using the power transmission system including the power transmission coil TC5 of the fifth embodiment and the power reception coil of the fifth embodiment, each of the overall shapes in a plan view of the power transmission loop coil TL51 and the power transmission loop coil TL52 is a mutually identical substantially square shape, and the position of the power transmission loop coil TL51 viewed from the center of the power transmission coil TC5 of each winding coincides with the position of the power transmission loop coil TL52 viewed from the center of the power transmission coil TC5 of each winding in plan view (see Fig. 23). Therefore, it is possible to reduce the impedance due to the so-called skin effect or proximity effect caused by configuring the power transmission coil TC5 and the power reception coil of the fifth embodiment by the copper thin film lines for weight reduction and cost reduction, and it is possible to concurrently achieve weight reduction and cost reduction, and improvement in transmission efficiency and prevention of an increase in operation temperature.

### Modifications

Next, modifications of the present invention will be described. The configuration of the power transmission system of each embodiment described above may be modified as illustrated in the following (A) and (B). In the present invention, even if each of said modifications is added, an effect equivalent to that of the above-described power transmission system can be obtained.

### (A) First modification

First, as a first modification, in the power transmission system of the second embodiment, the current adjustment coil TL23 may be laminated on the power reception device R side in the power transmission coil TC2 or may be laminated on the side opposite to the power reception device R as long as it is at a position other than between the power transmission loop coil TL21 and the power transmission loop coil TL22.

### (B) Second modification

Next, as a second modification, regarding the positional relationship between the current adjustment coil RL33 and the current adjustment coil RL34, and the power reception loop coil RL31 and the power reception loop coil RL32 of the third embodiment, it is preferable that the power reception loop coil RL31 and the power reception loop coil RL32 are laminated on the power transmission device T side (that is, the opposite side) with respect to the current adjustment coil RL33 and the current adjustment coil RL34.

### (C) Third modification

Next, as a third modification, the number of windings in which the power transmission loop coil TL21 and the power transmission loop coil TL22 of the second embodiment are connected in parallel may be an integral multiple of two times or more the number of windings of the current adjustment coil RL23. In addition, the number of windings in which the current adjustment coil RL33 and the current adjustment coil RL34 of the third embodiment are connected in series may be an integral multiple of three times or more the number of windings in which the power reception loop coil RL31 and the power reception loop coil RL32 are connected in parallel. In any case, the copper thin film lines constituting each coil overlap each other, and the same effects as those of the respective embodiments can be expected.

### INDUSTRIAL APPLICABILITY

As described above, the present invention can be used in the field of non-contact power transmission, and particularly, when the present invention is applied to the field of power transmission for charging a storage battery mounted on an electric vehicle, particularly remarkable effects can be obtained.

### EXPLANATION OF REFERENCE NUMERALS

S power transmission system
T power transmission device
TR power transmission unit
R power reception device
RV power reception unit
BF film
O1, O2 external connection terminal
M1, M2, M3 connection terminal
RC1, RC2, RC3 power reception coil
TC1, TCX, TC2, TC4, TC4X, TC5, TC5X power transmission coil
TL111, TL112, TL121, TL122, TLX1, TLX2, TLY1, TLY2, TL211,
TL212, TL221, TL222, TL231, TL232, TL411, TL412, TL4X1, TL4Y1,
TL511, TL512, TL5X1, TL5Y1, RL311, RL312, RL321, RL322, RL331,
RL332, RL341, RL342 copper thin film line
TL11, TL12, TLX, TLY, TL21, TL22, TL41, TL42, TL4X, TL4Y, TL51,
TL52, TL5X, TL5Y power transmission loop coil
RL31, RL32 power reception loop coil
V11, V12, W via
CV11, CV12, CV51, CV52, CV4X, CV4Y, CV5X, CV5Y curved portion
LA41, LA42 linear portion
TL23, RL33, RL34 current adjustment coil
Cp capacitor

## Claims

1. A coil for non-contact power transmission, the coil comprising:
a first winding line formed by winding a thin film conductor, the first winding line including a plurality of first linear portions each having a linear shape, and a plurality of first curved portions connecting the first linear portions to each other and each having a curved shape; and
a second winding line formed by winding a thin film conductor, the second winding line including a plurality of second linear portions each having a linear shape and a plurality of second curved portions connecting the second linear portions to each other and each having a curved shape, the second winding line being laminated on the first winding line with an insulating layer interposed therebetween, wherein
each of overall shapes in a plan view of the first winding line and the second winding line is a mutually identical polygon shape, and
a position of at least a part of each of the first linear portions as viewed from a center of the coil coincides with a position of at least a part of each of the second linear portions corresponding to at least a part of each of the first linear portions as viewed from the center in plan view.

2. The coil according to claim 1, wherein
in the winding of the first winding line, winding transition of one winding is performed only in one of the first curved portions included in one winding, and
in the winding of the second winding line, winding transition of one winding is performed only in one of the second curved portions included in one winding.

3. The coil according to claim 2, wherein
a position of the first curved portion in which the winding transition is performed in the first winding line and a position of the second curved portion in which the winding transition is performed in the second winding line are within a same region of the coil as viewed from the center.

4. The coil according to claim 1, wherein
in the winding of the first winding line, winding transition of one winding is performed only in one of the first linear portions included in one winding, and
in the winding of the second winding line, winding transition of one winding is performed only in one of the second linear portions included in one winding.

5. The coil according to claim 4, wherein
a position of each of the first curved portions as viewed from the center of the coil coincides with a position of each of the second curved portions corresponding to each of the first curved portions as viewed from the center in plan view.

6. The coil according to any one of claims 1 to 5, wherein
the first winding line is constituted of two first parallel winding lines arranged in parallel, and
the second winding line is constituted of two second parallel winding lines arranged in parallel.

7. The coil according to claim 6, wherein
in one winding of the first winding line, a width of the first parallel winding line on an inner circumference side is wider than a width of the first parallel winding line on an outer circumference side, and
in one winding of the second winding line, a width of the second parallel winding line on an inner circumference side is wider than a width of the second parallel winding line on an outer circumference side.

8. The coil according to any one of claims 1 to 5, wherein
a width of each of the first winding line and the second winding line is wider as the winding is closer to the center.

9. The coil according to any one of claims 1 to 8, wherein
an innermost circumference portion of the first winding line and an innermost circumference portion of the second winding line are connected to each other,
power to be transmitted is supplied to an outermost circumference end portion of each of the first winding line and the second winding line at time of power transmission, and power received from each of the outermost circumference end portions is output at time of power reception,
an adjustment winding line for adjusting a current flowing through the first winding line and the second winding line is further provided, the adjustment winding line being laminated at a same position as the first winding line and the second winding line,
the adjustment winding line includes a plurality of adjustment linear portions each having a linear shape, and a plurality of adjustment curved portions connecting the adjustment linear portions and each having a curved shape,
an overall shape in a plan view of the adjustment winding line is the polygon shape identical with the overall shape in a plan view of the first winding line or the second winding line, and
a position of each of the first linear portions as viewed from the center of the coil coincides with a position of each of the adjustment linear portions corresponding to each of the first linear portions as viewed from the center in plan view.

10. The coil according to claim 9, wherein
the plurality of adjustment winding lines are laminated at the same position as the first winding line and the second winding line.

11. The coil according to claim 10, wherein
outermost circumference end portions of the plurality of adjustment winding lines are connected,
a capacitance means configured to adjust the current is connected to innermost circumference portions of the plurality of adjustment winding lines, and
a capacitance of the capacitance means is at least equal to or less than a threshold capacitance corresponding to a frequency of power transmission by the coil.

12. A power transmission device included in a power transmission system including the power transmission device and a power reception device separated from the power transmission device, the power transmission system being configured to transmit power from the power transmission device to the power reception device in a non-contact manner, the power transmission device comprising:
a power transmission coil that is the coil according to any one of claims 1 to 11, the power transmission coil being disposed to face the power reception device; and
an output means configured to output power to be transmitted to the power transmission coil.

13. A power reception device included in a power transmission system including a power transmission device and the power reception device separated from the power transmission device, the power transmission system being configured to transmit power from the power transmission device to the power reception device in a non-contact manner, the power reception device comprising:
a power reception coil that is the coil according to any one of claims 1 to 11, the power reception coil being disposed to face the power transmission device; and
an input means connected to the power reception coil.

14. A non-contact power transmission system comprising:
the power transmission device according to claim 12; and
a power reception device separated from the power transmission device and disposed to face the power transmission coil, the power reception device being configured to receive power transmitted from the power transmission device.

15. A non-contact power transmission system comprising:
a power transmission device; and
the power reception device according to claim 13 separated from the power transmission device, the power reception coil being disposed to face the power transmission device, the power reception device being configured to receive power transmitted from the power transmission device.
